# EUROPEAN PATENT APPLICATION

(11) **EP 0 786 718 A2**
(43) Date of publication of application: **30.07.1997**
(21) Application number: 97100948.5
(22) Date of filing: 22.01.1997
(51) Int. Cl.: G06F 3/06, G06F 12/08

(54) **Device for distributing data in response to a plurality of requests for the same file**

(30) Priority: 23.01.1996 JP 9248/96; 26.12.1996 JP 348030/96
(71) Applicant: FUJITSU LIMITED, Kawasaki-shi, Kanagawa 211 (JP)
(72) Inventor: Yashiro, Mitsuhiko, Fujitsu Limited, Kawasaki-shi, Kanagawa 211 (JP)
(74) Representative: Seeger, Wolfgang, Dipl.-Phys.

(57) **Abstract**

A read request frequency counting unit counts the frequency of read requests for each file from requesting clients. A read request frequency determining unit determines whether or not there is a file for which the read request frequency has reached a predetermined value. A file transmission directing unit transmits to the requesting client a file for which the read request frequency has reached a predetermined value when there is the file for which the read request frequency has reached the predetermined value.

## Description

### Background of the Invention

### Field of the Invention

The present invention relates to a data distribution device, a storage apparatus, a method of controlling the devices, a data transfer system, and more specifically to a method applicable to a system for processing a large volume of sequential data such as movie images, voice and music data, etc.

### Description of the Related Art

Recently, there is an increasing demand for a system for storing a large volume of sequential multimedia data such as images, voices, music, etc. so that a plurality of users can retrieve and use the data.

This system has the following advantages.
(1) A number of read requests can be simultaneously issued for the same file in a storage apparatus.
(2) There are few data write requests to the storage apparatus, and therefore the ratio of data read requests to data write requests is high.
(3) The amount of data read from the storage apparatus at a single read request is large and read in series.

Therefore, the system should quickly answer the read requests simultaneously issued from a plurality of users for the same file.

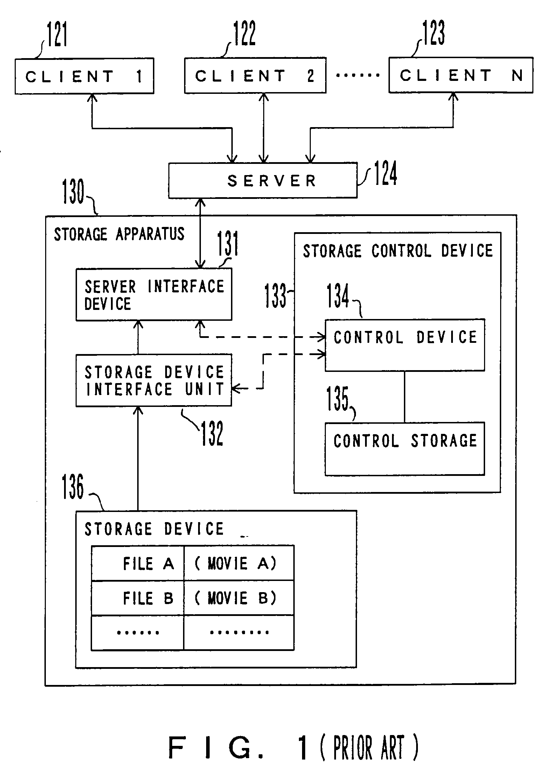

FIG. 1 shows the configuration of a conventional storage apparatus and a data transfer system.

In FIG. 1, 121, 122, and 123 are client 1, client 2, and client N respectively.

A server 124 reads data from and writes data to a storage apparatus 130 at the requests from the clients 121, 122, and 123.

The storage apparatus 130 is a storage apparatus and holds a large volume of sequential multimedia data such as images, voice, music, etc.

A server interface device 131 is an interface between the storage apparatus 130 and the server 124.

A storage device interface unit 132 interfaces with the storage apparatus 130 and a storage device 136.

The storage control device 133 controls reading from and writing to the storage device 136.

A control device 134 controls reading from and writing to the storage control device 133.

A control storage 135 holds a program for reading from and writing to the storage device 136.

The storage device 136 stores data for each file. For example, file A stores movie A, and file B stores movie B.

Described below are the operations with the configuration shown in FIG. 1.

At the read requests from the clients 121, 122, and 123, the server 124 notifies the storage apparatus 130 of reading the requested file. The notification is transmitted to the control device 134 through the server interface device 131, and the control device 134 instructs the storage device interface unit 132 to read the specified data according to the read control program of the control storage 135.

The storage device interface unit 132 retrieves the specified data in the file from the storage device 136, and transfers the data to the server interface device 131. The server interface device 131 receives the data transmitted from the storage device interface unit 132 and transfers it to the server 124. The server 124 transfers the received data to the requesting clients 121, 122, and 123.

If the storage device 136 is in the period of writing or reading data and cannot immediately start reading the specified data, the storage device interface unit 132 notifies the control device 134 that the storage device 136 is busy. The control device 134 notifies the server interface device 131 that the storage device 136 is busy. The notification is transmitted from the server interface device 131 to the server 124, and the server 124 instructs the clients 121, 122, and 123 that have issued read requests to stand by to read the data.

Described below is the case where data is written from the clients 121, 122, and 123 to the storage device 136.

The clients 121, 122, and 123 issue requests to write data to the server 124. The server 124 issues a write request to the server interface device 131. The write request from the server 124 is transmitted from the server interface device 131 to the control device 134, and the control device 134 accesses the storage device interface unit 132 according to the write control program of the control storage 135 to inquires the storage device interface unit 132 of the write possibility.

If the storage device 136 stands by to write data, the storage device interface unit 132 notifies the control device 134 that the data can be written to the storage device 136, and the notification is transmitted to the server 124 through the server interface device 131. The server 124 notifies the clients 121, 122, and 123 which have issued the write requests that the data can be successfully written.

The clients 121, 122, and 123 which have issued the write requests transfer data to be written to the server 124. The server 124 transfers to the server interface device 131 the data to be written after being received from the clients 121, 122, and 123. The data to be written is transferred to the storage device interface unit 132 and written to the storage device 136.

When the storage device 136 is busy and the data cannot be written, the storage device interface unit 132 notifies the control device 134 that the storage device 136 is busy, and the control device 134 notifies the server interface device 131 that the storage device 136 is busy. The server interface device 131 notifies the server 124 that the storage device 136 is busy, and the server 124 notifies the clients 121, 122, and 123 that the storage device 136 is busy.

However, even if the conventional data transfer system receives read requests for the same file simultaneously from a plurality of clients (clients 1 (121), 2 (122), and N (123)), it retrieves the data in the requested file from the storage device 136 in response to the requests from the respective clients 121, 122, and 123, and transfers the data to each of the requesting clients 121, 122, and 123 in the order in which the requests are received.

For example, a read request for file A is received almost simultaneously from clients 1 (121), 2 (122), and N (123) in this order. The server 124 issues a read request for file A to the server interface device 131. Under the above described control, the data in file A is retrieved from the storage device 136 of the storage apparatus 130 and is transferred to the server 124. The server 124 transfers the data in file A to the first requesting client (client 1 (121)).

When the transfer terminates, the server 124 similarly requests the server interface device 131 again to read file A. Under the above described read control, the data in file A is retrieved from the storage device 136 of the storage apparatus 130, and is transferred to the server 124. The server 124 transfers the data to the next client 2 (122).

When the transfer of the data to the client 2 (122) is completed, the server 124 requests the server interface device 131 to read file A again. According to the above described read control method, the data in file A is retrieved from the storage device 136 of the storage apparatus 130 and is transferred to the server 124. The server 124 transfers the data to the third requesting client N (123).

Thus, even if the conventional data transfer system receives read requests for the same file almost simultaneously from a plurality of clients 121, 122, and 123, data is repeatedly read from the same file through the storage device 136 and is transferred to the server 124, and the server 124 sequentially transfers the data in the file each time the data is read, thereby resulting in inefficient transfer.

Especially when the contents of the file refer to a large volume of sequential multimedia data such as movie data including pictures, voice, music, etc., it takes a long time to read data from the storage device 136. Therefore, the clients 121, 122, and 123 have to wait for a long time and the requests from the clients 121, 122, and 123 may not be immediately answered.

### Summary of the Invention

The present invention aims at providing a data distribution device, storage apparatus, a method of controlling these devices, and a data transfer system for efficiently retrieving requested data for transfer when a plurality of clients issue read requests for the same file.

To solve the above described problem, the present invention comprises a read request frequency counting unit for counting for each file the frequency of read requests for a file from a requesting client; a read request frequency determining unit for determining whether or not there is a file for which the read request frequency has reached a predetermined value; and a file transmission instructing unit for specifying the transfer of a file for which the read request frequency has reached a predetermined time.

Thus, a file for which read requests are frequently made can be simultaneously transferred to a plurality of requesting clients within a short time after the requests have been made. Therefore, it is not necessary to repeatedly read within a short time the same file for which read requests are frequently made, and the load onto the device of a requesting client can be reduced with the waiting time shortened until the requested file reaches.

The second aspect of the present invention further includes a first storage unit storing a file; a second storage unit having a higher read speed than the first storage unit; and a storage control unit for storing by priority a file for which read requests are made at a higher frequency.

Thus, a frequently read file can be quickly read and transmitted from the second storage unit, thereby shortening the time taken for exclusively occupying the first storage unit to read a file, and also shortening the time in which the first storage unit cannot be accessed. As a result, the waiting time of a requesting client can be successfully reduced.

According to the third aspect of the present invention, a storage apparatus comprises a storage unit holding a large volume of serial data in file units; and a storage control unit for controlling input and output of the data held in the storage unit. The storage control unit comprises a control unit for controlling reading data in the storage unit; a read request determining unit for determining a read request for the data in the same file held in the storage unit; a read request frequency counting unit for counting the frequency of requests to read a file each time a read request is made or for updating a count value for each file at predetermined time intervals; and a read start determining unit for instructing the control unit to read a corresponding file when a read request frequency count value for the file reaches a predetermined constant. With the configuration, the file is read when the frequency of requests to read the file reaches a predetermined frequency or after a predetermined time has passed from the first read request.

Thus, a file for which a read request is frequently made can be simultaneously transmitted to a plurality of requesting clients within a short time after read requests are made. On the other hand, a file for which a read request is rarely made can be simultaneously transmitted to a plurality of requesting clients after a predetermined time has passed. Therefore, it is not necessary to repeatedly read the same file within a short time regardless of the frequency of read requests, and the load onto the transmitting device can be reduced with the waiting time shortened until a requested file reaches.

According to the fourth aspect of the present invention, the storage apparatus comprises a requesting client information reading unit for reading the contents of a read request reception table from a server; and a data transfer unit for transferring serial data of a file to a requesting client based on the contents of the read request reception table.

Thus, since the serial data in the requested file can be directly transferred from the storage apparatus to the requesting client, the time taken for transmitting the serial data in the requested file to the requesting client can be shortened, and the load onto the server can be successfully reduced.

According to the fifth aspect of the present invention, the cache management table for use in managing the storage area of cache memory comprises a file management table for use in managing the priority of a file stored in the cache memory; and a block management table for use in managing the priority of block storage for each file.

Therefore, data can be stored in the cache memory or deleted from the cache memory in file units, thereby preventing the data stored in the cache memory from discontinuing in the file, and smoothly reading a file for which a request to read from the cache memory has been made.

### Brief Description of the Drawings

FIG. 1 shows the conventional storage apparatus and the data transfer system;
FIG. 2 is a block diagram showing the configuration of the data distribution device according to the first embodiment of the present invention;
FIG. 3 is a block diagram showing the configuration of the storage apparatus according to the first embodiment of the present invention;
FIG. 4 is a block diagram showing the configuration of the storage apparatus according to the second embodiment of the present invention;
FIG. 5 is a block diagram showing the configuration of the receiving device according to the first embodiment of the present invention;
FIG. 6 shows the method of controlling the cache memory according to the first embodiment of the present invention;
FIG. 7 is a block diagram showing the configuration of the data transfer system according to the first embodiment of the present invention;
FIG. 8 is a block diagram showing the configuration of the data transfer system according to the second embodiment of the present invention;
FIG. 9 shows the read request frequency counting unit and the read request table according to the first embodiment of the present invention;
FIG. 10 shows the operation of the data transfer system shown in FIG. 8;
FIG. 11 is a flowchart showing the operation of the data transfer system shown in FIG. 8 according to the first embodiment of the present invention;
FIG. 12 is a flowchart showing the operation of the data transfer system shown in FIG. 8 according to the second embodiment of the present invention;
FIG. 13 is a flowchart showing the operation of the data transfer system shown in FIG. 8 according to the third embodiment of the present invention;
FIG. 14 is a block diagram showing the configuration of the data transfer system according to the second embodiment of the present invention;
FIG. 15 is a flowchart showing the operation of the data transfer system shown in FIG. 14 according to the first embodiment of the present invention;
FIG. 16 is a flowchart showing the operation of the data transfer system shown in FIG. 14 according to the second embodiment of the present invention;
FIG. 17 shows the method of controlling the cache memory according to the first embodiment of the present invention;
FIG. 18 shows the method of controlling the cache memory according to the first embodiment of the present invention;
FIG. 19 is a flowchart (1) showing the method of controlling the cache memory according to the first embodiment of the present invention;
FIG. 20 is a flowchart (2) showing the method of controlling the cache memory according to the first embodiment of the present invention;
FIG. 21A shows the method of storing a block in the cache memory according to the first embodiment of the present invention;
FIG. 21B shows the method of storing a block in the cache memory according to the second embodiment of the present invention;
FIG. 21C shows the method of storing a block in the cache memory according to the third embodiment of the present invention;
FIG. 22 is a block diagram showing the configuration of the data transfer system according to the third embodiment of the present invention; and
FIG. 23 is a block diagram showing the configuration of the data transfer system according to the fourth embodiment of the present invention;

### Detailed Description of the Preferred Embodiments

The data distribution device according to the embodiment of the present invention is explained below by referring to the attached drawings.

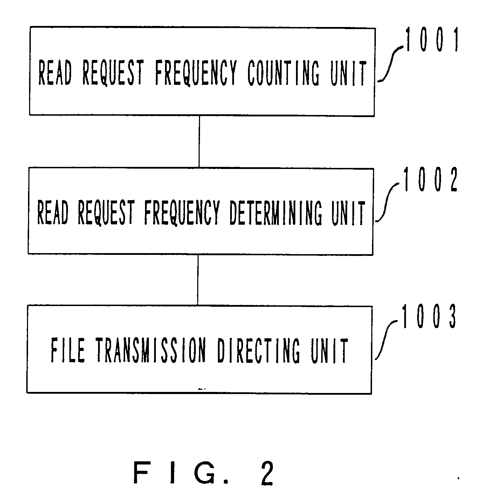

FIG. 2 is a block diagram showing the configuration of the data distribution device according to an embodiment of the present invention.

In FIG. 2, a read request frequency counting unit 1001 counts the file read request frequency from requesting clients for each file. A read request frequency determining unit 1002 determines whether or not there is any file for which read request frequency has reached a predetermined value. If there is a file for which read request frequency has reached a predetermined value, a file transmission directing unit 1003 issues a direction to transmit to the requesting clients the file for which read request frequency has reached a predetermined value.

Therefore, since the read request frequency counting unit 1001 indicates that the read request frequency counted by the read request frequency counting unit 1001 for a file for which read requests are frequently made reaches a predetermined value in a short time, the file transmission directing unit 1003 quickly issues a direction to transmit the file to the requesting client and the file can be simultaneously transmitted to a plurality of requesting clients within a short time after read requests have been made.

Furthermore, since a file can be transmitted to a plurality of requesting clients by reading the file only once, it is not necessary to repeatedly read within a short time the same file for which read requests are frequently made, thereby reducing the load onto a transmitting device.

Then, the storage apparatus according to the embodiments of the present invention is described by referring to the attached drawings.

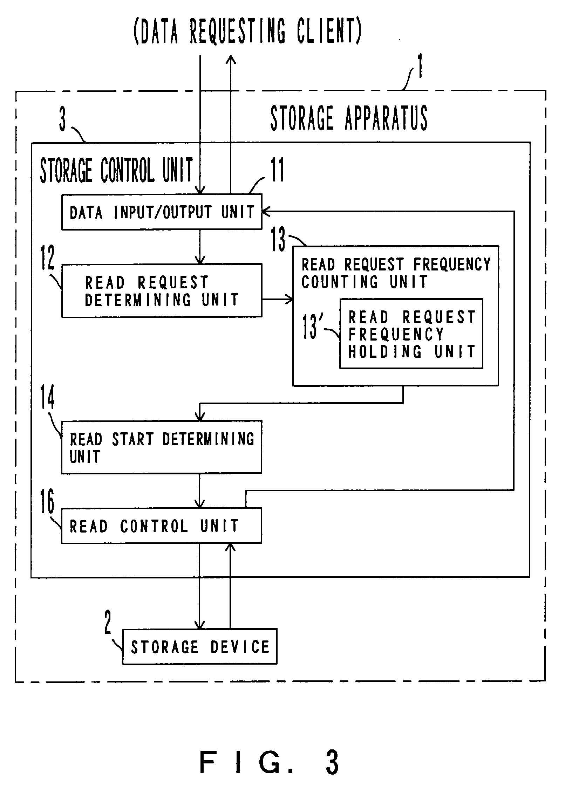

FIG. 3 is a block diagram showing the configuration of the storage apparatus according to the first embodiment of the present invention.

In FIG. 3, a storage apparatus 1 comprises a storage device 2 storing data and a storage control unit 3 for controlling reading data from and writing data to the storage device 2.

The storage device 2 stores a large volume of serial data such as video programs in file units.

The storage control unit 3 controls reading data from and writing data to the storage device 2.

A data input/output unit 11 inputs and outputs a read request, a write request, data, etc.

A read request determining unit 12 determines a read request.

A read request frequency counting unit 13 counts for each file the frequency of read requests for the same file stored in the storage device 2, or updates the count value at predetermined time intervals even if there are no read requests.

A read request frequency holding unit 13' holds a count value indicating the frequency of read requests for each file.

A read start determining unit 14 determines whether or not the count value stored in the read request frequency holding unit 13' has reached a predetermined value and determines the start of reading a file for which the count value has reached the predetermined value.

A read control unit 16 controls reading data from the storage device 2.

The storage control unit 3 shown in FIG. 3 is represented by the configuration required only to read data, and the configuration required to write data is omitted.

Described below is the operation of the storage apparatus shown in FIG. 3. The description is limited to the operation for a data read request.

The data input/output unit 11 receives a request issued by a data requesting client to the storage apparatus 1. The read request determining unit 12 determines a data read request from the request received by the data input/output unit 11. The read request frequency counting unit 13 counts the frequency of read requests for each requested file, and stores the count value in the read request frequency holding unit 13'. Even if there are no read requests, the read request frequency counting unit 13 updates the count values for all files at predetermined time intervals. The read start determining unit 14 determines whether or not the count value obtained by the read request frequency counting unit 13 has reached a predetermined value. If the value has reached the predetermined value, the read start determining unit 14 determines reading the corresponding file, and instructs the read control unit 16 to read data in the corresponding file.

The read control unit 16 reads the data in the specified file from the storage device 2 and transfers the data to the data input/output unit 11. The data input/output unit 11 transfers the data read from the storage device 2 to the requesting client. If the data read from the storage device 2 is the data requested by a plurality of clients, then the data is transferred to each client.

As described above, the storage apparatus according to the first embodiment of the present invention reads in a single reading operation the data in the same file almost simultaneously requested by a plurality of clients, and transfers the data to each requesting client. Therefore, the frequency of reading data from the storage device 2 can be reduced, and the efficiency in reading data can be considerably improved.

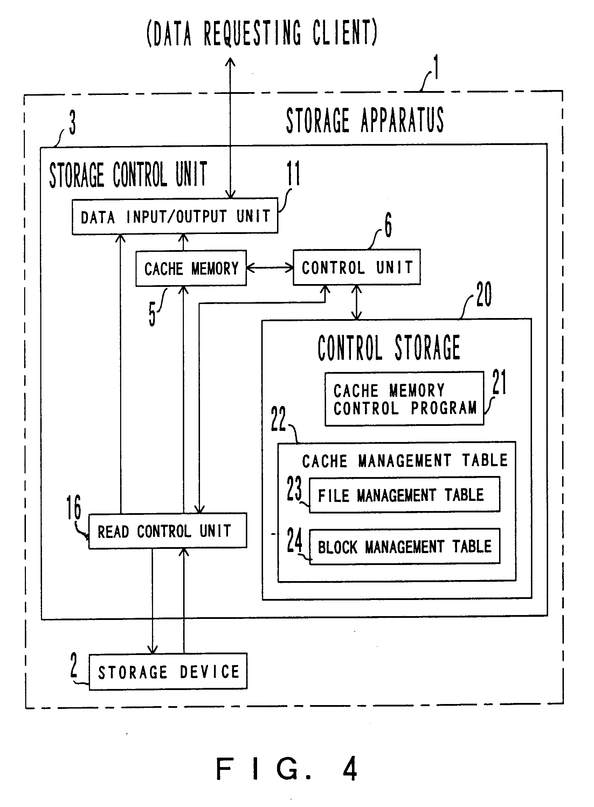

FIG. 4 is a block diagram showing the configuration of the storage apparatus according to the second embodiment of the present invention, and the embodiment shown in FIG. 4 relates to the method of controlling the cache memory 5.

As shown in FIG. 4, when data is transferred by providing the cache memory 5, the physical or logical block of the storage device 2 can be a substitute unit in a cache memory 5. When a new block is stored in the cache memory 5, it is stored in the cache memory 5 if available. If the cache memory 5 is not available, one of the existing blocks is replaced by a new block.

However, if a block of serial data in a file is managed in the cache memory 5 simply in block units, blocks are removed from the leading block (the oldest block). If a file read request is made after the blocks are removed, then one of the removed blocks can be the block of a file for which a read request has been made. In this case, a hit transfer cannot be performed, thereby reducing the data providing efficiency.

To prevent such inefficiency, the second embodiment shown in FIG. 4 includes a cache management table 22, and manages a blank area in the cache memory 5 in both file units and block units.

The data to be processed in the second embodiment of the present invention are more likely to be read by an access request to the storage apparatus 1, and the data are a large volume of serial data. Therefore, it is effective to provide the cache memory 5 in the storage apparatus 1. When compared with the case in which only a cache memory 5 is provided, controlling the blank area in the cache memory 5 both in file units and block units can furthermore improve the data transfer ability of the cache memory 5.

That is, according to the second embodiment of the present invention, the storage control unit 3 comprises the cache memory 5 and the cache management table 22, in the method of controlling reading data in a file using the storage apparatus 1 comprising the storage device 2 for holding a large volume of serial data in file units and the storage control unit 3 for controlling input and output of data held by the storage device 2.

The cache management table 22 comprises a file management table 23 for use in managing the priority of a file stored in the cache memory 5; and a block management table 24 for use in managing the priority of block storage for each file.

A cache memory control program 21 defines on the file management table 23, the highest priority to be stored in the cache memory 5 for a requested file.

The cache memory control program 21 also defines on the block management table 24, the highest priority for a block for which a read request has been last made, and sequentially lowers the priority in order from the first requested block. If there are no region on the cache memory 5 to write new blocks, then the cache memory control program 21 determines a file to be removed in order from the lowest priority assigned to a file, and removes the blocks in order from the block assigned the lowest priority in the file.

When a serial data to be sequentially accessed is stored, the accessibility of the serial data is checked. If some blocks of the serial data are stored in the cache memory 5 and if access is gained to a block before the above described block, then the file is assigned the highest priority and the blocks are not removed from the cache memory 5, and the blocks from the one a little after the block for which an access request has been made to the one immediately before the block stored in the cache memory 5 are stored in the cache memory 5.

In FIG. 4, 1 shows a storage apparatus, and 2 shows a storage unit for holding a large volume of serial data in file units. For example, the serial data can be movie data, etc., and the storage device 2 stores a large volume of serial multimedia data such as movie, music, and voice data, etc. in file units.

5 shows a cache memory. A control unit 6 controls the storage device 2 and the cache memory 5. A control storage 20 holds a control program, etc. for the control unit 6. The cache memory control program 21 controls the cache memory 5 using the control unit 6.

The cache management table 22 comprises the file management table 23 for use in managing the file of the cache memory 5; and the block management table 24 for use in managing blocks.

The file management table 23 is used in managing the files stored in the cache memory 5 and holds the priority in storing a file when a block is removed.

The block management table 24 holds the priority in storing a block for each file.

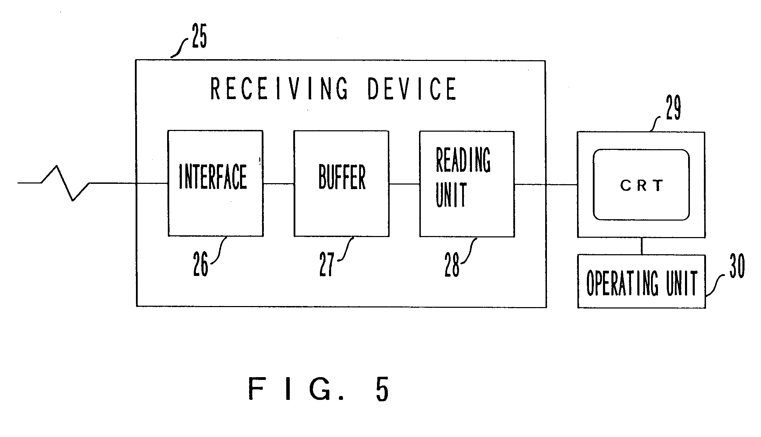

FIG. 5 is a block diagram showing the configuration of the receiving device according to an embodiment of the present invention.

In FIG. 5, a receiving device 25 is provided in a data requesting client, and an interface 26 connects the communications circuit and the receiving device 25. A buffer 27 stores the data transmitted from data requesting destination. A reading unit 28 reads the data stored in the buffer 27 at a predetermined reading speed. 29 is a CRT. An operating unit 30 is an operating unit for requesting transmitting data to data requesting destination or issuing an instruction to fast-forward, rewind, temporarily stop the data, etc.

For example, the receiving device 25 stores in the buffer 27 the data transmitted after being read at a high speed from the cache memory 5 shown in FIG. 4. When the reading unit 28 reads the data stored in the buffer 27 at a predetermined reading speed, images such as movie pictures can be reproduced at a normal speed, and a special reproducing operations such as a fast-forwarding process, a rewinding process, a temporary stop, etc. can be performed.

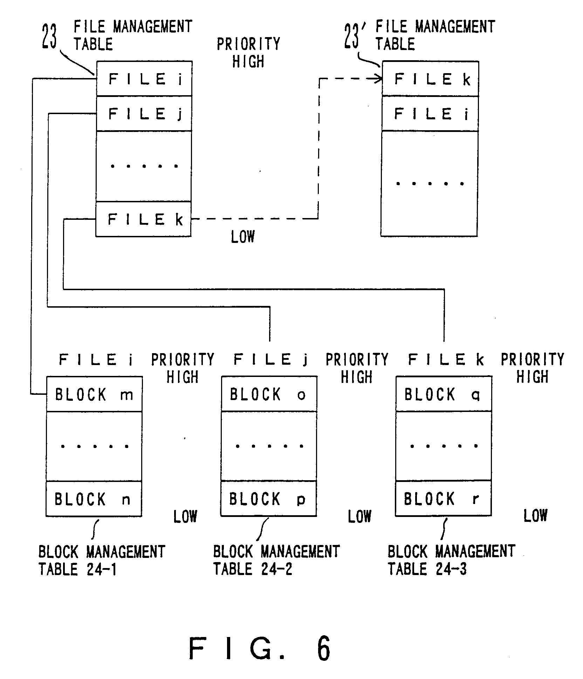

FIG. 6 shows the method of controlling the cache memory 5 shown in FIG. 4.

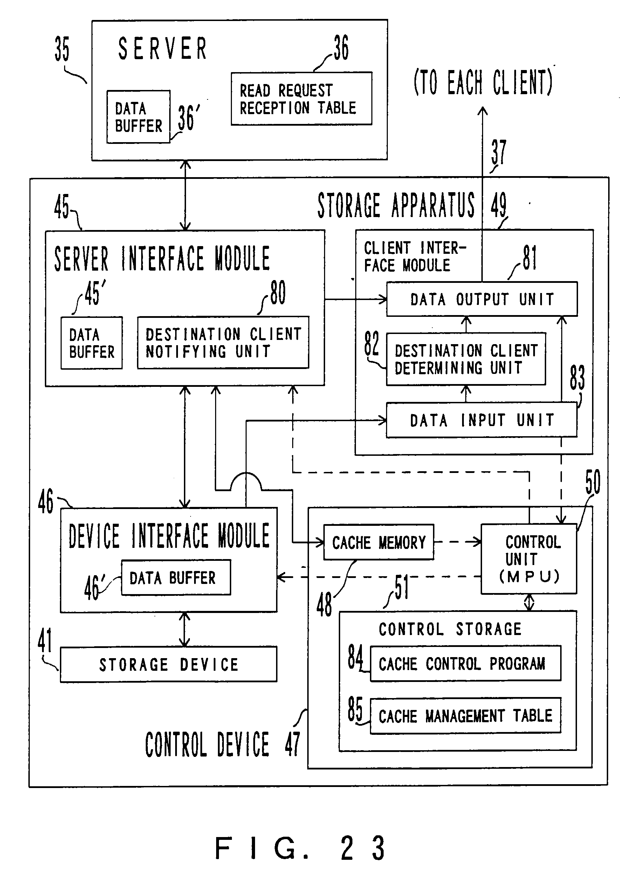

In FIG. 6, 23 and 23' show file management tables. The file management table 23 stores file i, file j, ..., and file k containing data to be stored in the cache memory 5 based on the priority levels. For example, when a read request is made for file k in the file management table 23, the file management table 23' is generated with the priority of file k assigned the highest priority. Thus, the file last read as the file Containing a block is assigned the highest priority, and the first read file is assigned the lowest priority (least recently used (LRU) method).

24-1, 24-2, and 24-3 are block management tables.

A block management table 24-1 is used for file i, and stores data blocks for file i stored in the cache memory 5 with the priority assigned to each block to appropriately remove the blocks. That is, the block management table 24-1 shows the states of block m, ..., and block n stored in the cache memory 5. The priority of block m is the highest and the priority of block n is the lowest. The blocks in a file are managed by the first-in-first-out (FIFO) method or the LRU method. A newest block is assigned the highest priority so that the oldest block can be first removed.

A block management table 24-2 is used for file j, and shows the states of block o, ..., and block p stored in the cache memory 5. The priority of block o is the highest and the priority of block p is the lowest.

The block management table 24-3 is used for file k, and shows the states of block q, ..., and block r stored in the cache memory 5. The priority of block q is the highest and the priority of block r is the lowest.

Described below are the operations of the storage apparatuses shown in FIG. 4.

In FIG. 6, the file management table 23 records file i, file j, ..., and file k. File i is assigned the highest priority, and file k is assigned the lowest priority.

In the state of the file management table 23, file k is assigned the highest priority as in the file management table 23' when a request to read file k is made. Thus, a file is managed in the LRU method with the last read file assigned the highest priority and the first read file assigned the lowest priority.

When a block is removed, the file management table 23 is referred to so that the blocks can be sequentially removed from the block in the file assigned the lowest priority.

For example, when the file management table 23 shown in FIG. 6 is referred to, block q, ..., and block r in file k are sequentially removed.

Blocks are sequentially removed from the block assigned the lowest priority in the FIFO method. They can also be removed in the LRU method.

For example, when block q, ..., and block r in file k are removed, block r is first removed and block q is last removed.

Thus, the possibility that a block in a frequently used file may be removed is reduced by managing the cache memory 5 by the combination use of the file management table 23 and block management table 24, thereby improving the possibility of a hit transfer.

When consecutively accessed serial data is stored in the cache memory 5, the serial data access state is checked. If some blocks in the serial data are stored in the cache memory 5 and the data before the blocks is accessed, then the file is assigned the highest priority without removing the blocks, and blocks are stored from the block after the blocks for which an access request has been made to the block immediately before the blocks stored in the cache memory 5. As a result, the possibility of a hit transfer can be increased.

The data transfer system according to an embodiment of the present invention is described by referring to the attached drawings.

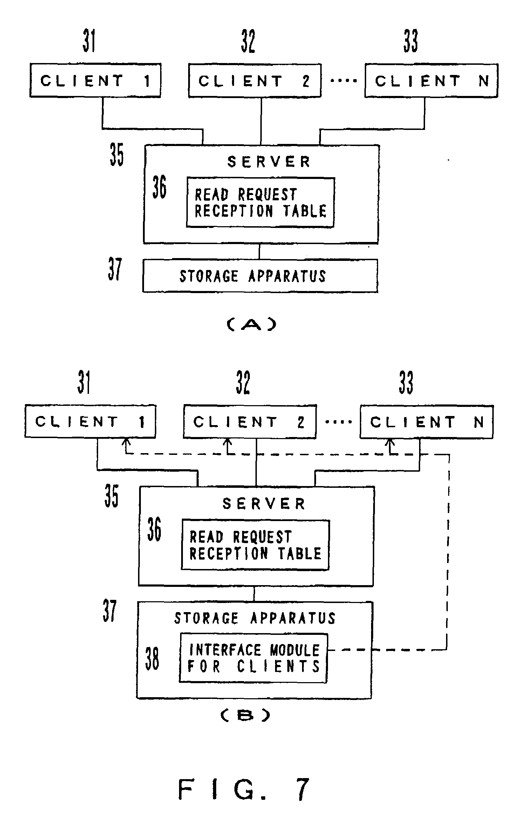

FIG. 7(A) shows the configuration for transferring from a server to a client the data read from the storage apparatus.

FIG. 7(B) shows that the storage apparatus comprises an interface with a client, and shows the configuration for directly transferring from the storage apparatus to a client the data read from the storage apparatus.

In FIG. 7, 31, 32, and 33 show clients 1, 2, and N respectively.

35 shows a server, and 36 shows a read request reception table storing requested file names and the corresponding clients 31, 32, and 33 requesting the files. 37 shows a storage apparatus, and an interface module for clients 38 is provided in the storage apparatus 37 for functioning as an interface with the clients 31, 32, and 33.

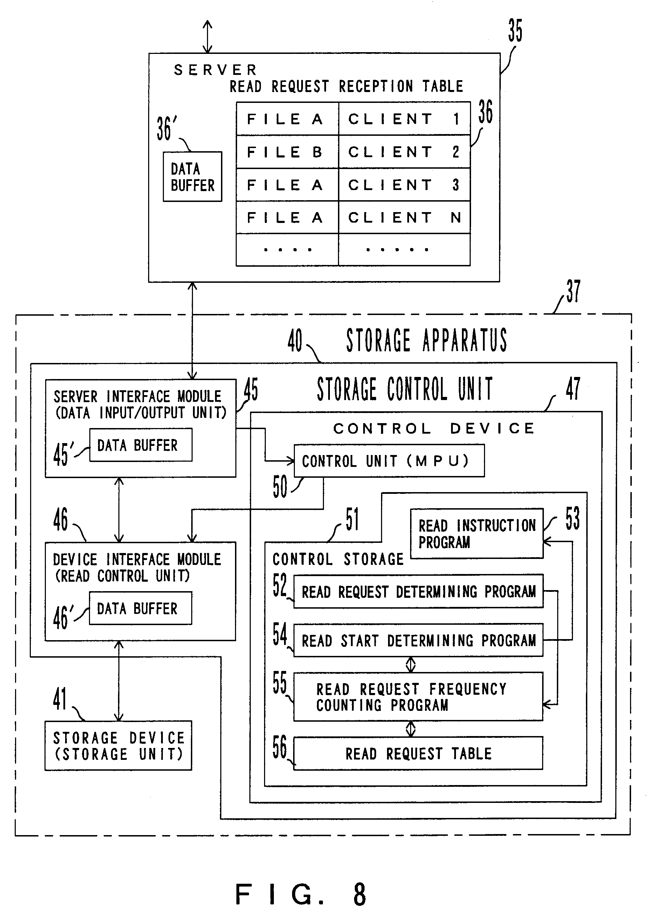

FIG. 8 shows in detail the configuration of the server 35 and storage apparatus 37 of the data transfer system shown in FIG. 7(A).

In FIG. 8, 35 shows a server, and 36 shows a read request reception table. A data buffer 36' temporarily stores transfer data. 37 shows a storage apparatus. For example, it is recorded on the read request reception table 36 that client 1 has made a read request for file A stored in a storage device 41, client 2 has made a read request for file B stored in a storage device 41, client 3 has made a read request for file A stored in a storage device 41, and client N has made a read request for file A stored in a storage device 41.

In the storage apparatus 37, 40 is a storage control unit, and 41 shows a storage device such as a magnetic disk device, optically read data storage unit, CD-ROM, etc. for storing a large volume of data, and corresponds to the storage device 2 shown in FIG. 3.

In the storage control unit 40, a server interface module 45 receives a read or write request from the server 35 to the storage device 41. In the reading process, the data read from the storage device 41 is received from a device interface module 46 and output to the server 35. In the writing process, the data written and received from the server 35 is transferred to the device interface module 46. The server interface module 45 corresponds to the data input/output unit 11 shown in FIG. 3.

A data buffer 45' temporarily stores transfer data.

Upon receipt of the read request from the server interface module 45, the device interface module 46 retrieves the data requested by the server interface module 45 from the storage device 41, transfers the data to the server interface module 45, and writes the data transferred from the server 35 to the storage device 41 at the write request from the server interface module 45.

A data buffer 46' temporarily holds transfer data.

A control device 47 is a microprocessor unit (MPU).

A control storage 51 holds a control program, etc. of a control unit 50.

A read request determining program 52 determines whether or not the request from the server 35 is a data read request.

A read instruction program 53 instructs the device interface module 46 to read data.

A read start determining program 54 determines the start of reading data.

A read request frequency counting program 55 comprises a counter, a timer, etc., counts the frequency of read requests for each file, and updates the count value of each file at predetermined time intervals when there are no read requests.

A read request table 56 holds the frequency of read requests for each file.

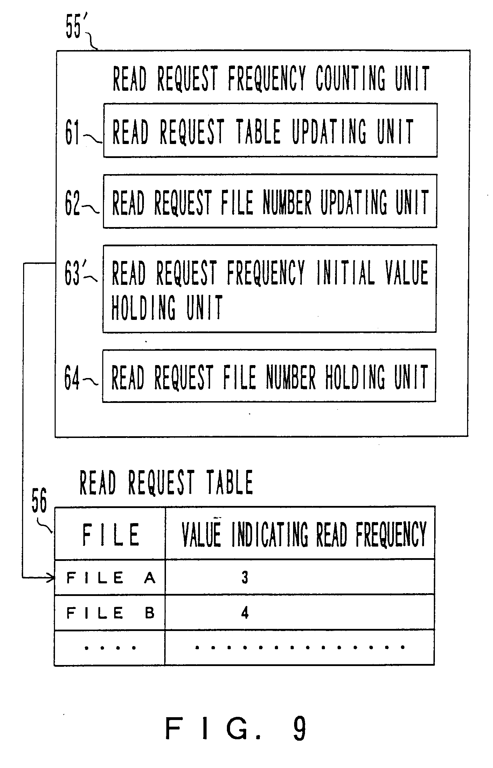

FIG. 9 shows an embodiment of the read request frequency counting unit and the read request table 56.

In FIG. 9, a read request frequency counting unit 55' stores the read request frequency counting program 55.

The read request table 56 holds a value (obtained by subtracting 1 from the initial value each time a read request is made) indicating the frequency of read requests for each file. For example, '3' is held as a value indicating the frequency of read requests for file A, and '4' is held as a value indicating the frequency of read requests for file B.

In the read request frequency counting unit 55', a read request table updating unit 61 subtracts 1 from the initial value indicating the frequency of read requests for a requested file each time the read request is made for the requested file. Even if there are no read requests, the read request table updating unit 61 updates the count value for each file recorded on the table at predetermined time intervals.

A read request file number updating unit 62 counts the frequency of read requests for the requested file each time the file is read, and does not update the value of a read request file number holding unit 64 for the file already requested, but updates only the value of the read request file number holding unit 64 for the file other than the requested file when a read request is made.

A read request frequency initial value holding unit 63' holds the initial value indicating the frequency of read requests for each file.

A read request file number holding unit 64 holds the frequency of read requests for a file.

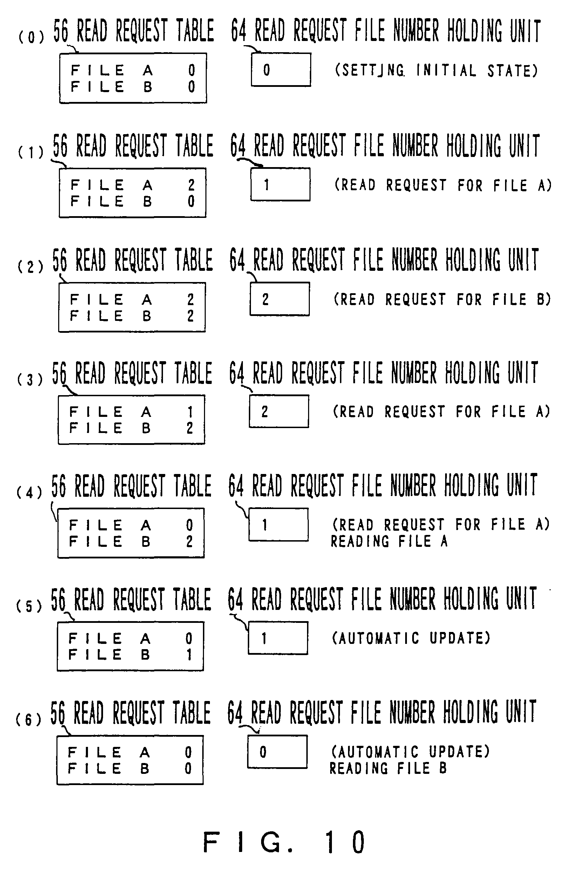

FIG. 10 shows the operations of the data transfer system shown in FIG. 8, and shows a change in the contents of the read request table 56 and read request file number holding unit 64 shown in FIG. 9.

In FIG. 10, it is assumed that the data of a file is read from the storage device 41 and transferred to the server 35 when the file is read three times. In the read request frequency initial value holding unit 63', for example, '2' is set as the initial value indicating the frequency of read requests for file A, and '2' is set as the initial value indicating the frequency of read requests for file B.

In FIG. 10, 56 is a read request table, and 64 is a read request file number holding unit.
(0) in FIG. 10 shows the initial states of the read request table 56 and the read request file number holding unit 64. That is, the values indicating the frequencies of read requests for files A and B on the read request table 56 are set to 0, and the number of read-requested files in the read request file number holding unit 64 is also set to 0.
(1) in FIG. 10 shows the states of the read request table 56 and the read request file number holding unit 64 when a read request is made for file A within a predetermined time in the state of (0) shown in FIG. 10.
   In this case, the initial value 2 of the read request frequency initial value holding unit 63' is set as the frequency of read requests for file A on the read request table 56. The frequency of read requests is counted in the subtraction method. The value indicating the frequency of read requests is reduced by 1 each time the file is read. When the value indicating the frequency of read requests indicates '0', it is assumed that the read request has been made 3 times, and the data is read. Then, the read request file number holding unit 64 is set to 1. The frequency of read requests for file B on the read request table 56 remains '0'.
(2) in FIG. 10 shows the states of the read request table 56 and the read request file number holding unit 64 when a read request is made for file B within a predetermined time in the state of (1) shown in FIG. 10.
   In this case, the initial value 2 of the read request frequency initial value holding unit 63' is set as the frequency of read requests for file B on the read request table 56. The value 1 of the read request file number holding unit 64 is increased to 2. The frequency of read requests for file A on the read request table 56 remains '2'.
(3) in FIG. 10 shows the states of the read request table 56 and the read request file number holding unit 64 when a read request is made for file A within a predetermined time in the state of (2) shown in FIG. 10.
   In this case, the frequency of read requests for file A on the read request table 56 is set to the value 1 obtained by subtracting 1 from the initial value 2. The read request file number holding unit 64 remains 2, and the frequency of read requests for file B on the read request table 56 remains 2.
(4) in FIG. 10 shows the states of the read request table 56 and the read request file number holding unit 64 when a read request is made for file A within a predetermined time in the state of (3) shown in FIG. 10.
   In this case, the frequency of read requests for file A is set to the value 0 obtained by subtracting 1 from the frequency 1 of a read request for file A. In this example, when the frequency of read requests becomes 0, the data in file A is read from the storage device 41 and transferred to the server 35. Then, 1 is subtracted from the value 2 of a read request file number holding unit 64, and the difference 1 is obtained. The frequency of read requests for file B on the read request table 56 remains 2.
   At this time, the server 35 retrieves the three clients 1, 3, and N who have made read requests for file A by referring to the read request reception table 36 shown in FIG. 8. Then, the server 35 transmits the data in file A simultaneously to the three clients 1, 3, and N who made the requests to read file A.
   Thus, the clients 1, 3, and N can receive the data in file A even if a predetermined time has not passed yet when a predetermined value is reached for the frequency of read requests, thereby shortening the waiting time until the data in file A has been received. Since the data in file A can be transmitted to the three clients 1, 3, and N who made the requests to read file A by once reading the data from the storage device 41, the load onto the storage control unit 40 or storage device 41 can be successfully reduced.
(5) shown in FIG. 10 indicates the states of the read request table 56 and the read request file number holding unit 64 when no read requests have been made in the state (4) shown in FIG. 10.
   In this case, since the value of the read request file number holding unit 64 is not 0, it is recognized that there is file B for which a read request has been made but actually has not been read yet. After a predetermined time has passed, 1 is subtracted from the frequency of read requests for file B on the read request table 56, and the frequency is automatically updated to 1. The value 1 of the read request file number holding unit 64 remains 1. The frequency of read requests in the read request file number holding unit 63 remains 1, and the frequency of read requests for file A on the read request table 56 remains 0.
(6) shown in FIG. 10 indicates the states of the read request table 56 and the read request file number holding unit 64 when no read requests have been made in the state (5) shown in FIG. 10.
   In this case, after a predetermined time has passed, 1 is subtracted from the frequency of read requests for file B and the frequency is automatically updated to 0. Since the frequency of read requests for file B is set to 0, the data in file B is read from the storage device 41 and is transferred to the server 35.
   Then, 0 is obtained by subtracting 1 from the value 1 of the read request file number holding unit 64. Since the value of the read request file number holding unit 64 becomes 0, it is recognized that there are no files which have been requested, but not have been read yet.
   When the server 35 receives the data in file B, it retrieves the client 2 who requested the read request for file B by referring to the read request reception table 36 shown in FIG. 8. Then, the server 35 transmits the data in file B to the client 2 who has made a read request for file B.
   Thus, after a predetermined time has passed, the client 2 can receive the data in file B for which the frequency of read requests has not reached a predetermined value.

In the example shown in FIG. 10, the initial values of the frequencies of read requests for files A and B are set to 2. If it is predicted that the frequency of read requests for file A is high and the frequency of read requests for file B is low, then the initial value for the frequency of read requests for file A can be set to a larger value and the initial value for the frequency of read requests for file B can be set to a smaller value.

For example, if the initial value for the frequency of read requests for file B is set to 0, then the requesting client can immediately receive the data in file B without waiting for the passage of a predetermined time. This is especially effective when a file for which only one read request is made within a predetermined time.

Next, the operations of the data transfer system shown in FIG. 8 are described in detail by referring to the read request shown in FIG. 10 as an example.

Assume that the client 1 shown in FIG. 7(A) has made a read request for file A stored in the storage device 41 shown in FIG. 8. In response to the read request for file A from the client 1, the server 35 records file A corresponding to the client 1 on the read request reception table 36. The server 35 transfers a read request for file A to the server interface module 45 of the storage apparatus 37. The server interface module 45 receives the read request for file A.

The control device 47 determines that the control unit 50 and the read request determining program 52 have made the read requests for file A. The read request frequency counting program 55 (that is, the read request frequency counting unit 55' shown in FIG. 9) sets 2 as the initial value for the read frequency value for file A on the read request table 56. By setting 2 as the initial value, data can be read when the third read request is made. Then, 1 is set in the read request file number holding unit 64. The above described operations correspond to the states indicated by (1) shown in FIG. 10.

Next, assume that the client 2 made a read request for file B before a predetermined time has passed from the read request for file A from the client 1. In response to the read request for file B from the client 2, the server 35 records file B corresponding to the client 2 on the read request reception table 36. The read request for file B is transferred from the server 35 to the server interface module 45 of the storage apparatus 37. The server interface module 45 receives the read request for file B.

The control device 47 determines that a read request for file B has been made from the control unit 50 and the read request determining program 52. The read request frequency counting program 55 (that is, the read request frequency counting unit 55' shown in FIG. 9) sets 2 as the initial value for the read frequency value for file B on the read request table 56. Then, 1 is added to the value of the read request file number holding unit 64, and the resultant 2 is set. The above described operations correspond to the state indicated by (2) shown in FIG. 10.

Next, assume that the client 3 made a read request for file A before a predetermined time has passed from the read request for file B from the client 2. In response to the read request for file A from the client 3, the server 35 records file A corresponding to the client 3 on the read request reception table 36. The read request for file A is transferred from the server 35 to the server interface module 45 of the storage apparatus 37. The server interface module 45 receives the read request for file A.

The control device 47 determines that a read request has been made from the control unit 50 and the read request determining program 52. The read request frequency counting program 55 (that is, the read request frequency counting unit 55' shown in FIG. 9) sets the value 1 obtained by subtracting 1 from 2 on the read request table 56 as a read frequency value for file A. Since a read request for file A has been made, the value of the read request file number holding unit 64 is not changed. The above described operations correspond to the state indicated by (3) shown in FIG. 10.

Next, assume that the client N made a read request for file A before a predetermined time has passed from the read request for file A from the client 3. In response to the read request for file A from the client N, the server 35 records file A corresponding to the client N on the read request reception table 36. The read request for file A is transferred from the server 35 to the server interface module 45 of the storage apparatus 37. The server interface module 45 receives the read request for file A.

The control device 47 determines that a read request has been made from the control unit 50 and the read request determining program 52. The read request frequency counting program 55 (that is, the read request frequency counting unit 55' shown in FIG. 9) sets the value 0 obtained by subtracting 1 from 1 on the read request table 56 as a read frequency value for file A.

The read start determining program 54 determines that the frequency value of a read request for file A on the read request table has become 0, and notifies the read instruction program 53 of the determination. Then, the read instruction program 53 is activated and the control unit 50 instructs the device interface module 46 to read file A in the storage device 41. 1 is subtracted from the value 2 of the read request file number holding unit 64, obtaining the difference 1. The above described operations correspond to the state of (4) shown in FIG. 10.

When the device interface module 46 receives an instruction to read file A from the control device 47, it reads the data of file A from the storage device 41, and transfers the data to the server interface module 45. The server interface module 45 receives the data of file A and transfers the data to the server 35.

The server 35 received the data of file A from the server interface module 45 holds the data in the data buffer 36'. Then, the server 35 refers to the read request reception table 36 and transfers the data of file A to the clients 1, 2, and N recorded on the read request reception table 36. When the data is completely transferred to each client, the data in the data buffer 36' is cleared, and the reception record of file A on the read request reception table 36 is cleared.

Assume that the next read request is not made after a predetermined time has passed. Since the value of the read request file number holding unit 64 is not 0, the read request frequency counting program 55 (that is, the read request frequency counting unit 55' shown in FIG. 9) recognizes that there is file B for which a read request has been made and which has not been read yet, and subtracts 1 from the read frequency value 2 on the read request table 56, obtaining the difference 1. The above described operations correspond to the state of (5) shown in FIG. 10.

Assume that the next read request is not made after a predetermined time has passed. Since the value of the read request file number holding unit 64 is not 0, the read request frequency counting program 55 (that is, the read request frequency counting unit 55' shown in FIG. 9) recognizes that there is file B for which a read request has been made and which has not been read yet, and subtracts 1 from the read frequency value 1 on the read request table 56, obtaining the difference 0.

The read start determining program 54 determines that the frequency value of a read request for file B on the read request table 56 has become 0, and notifies the read instruction program 53 that the frequency of read requests for file B has become 0. Then, the read instruction program 53 is activated and the control unit 50 instructs the device interface module 46 to read file B. 1 is subtracted from the value 1 of the read request file number holding unit 64, obtaining the difference 0. The above described operations correspond to the state of (6) shown in FIG. 10.

When the device interface module 46 receives an instruction to read file B, it reads the data of file B from the storage device 41, and transfers the data to the server interface module 45. The server interface module 45 receives the data of file B and transfers the data to the server 35.

The server 35 received the data of file B from the server interface module 45 holds the data in the data buffer 36'. Then, the server 35 refers to the read request reception table 36, and transfers the data of file B received from the server interface module 45 to the requesting client 2. When the data of file B is completely been transferred, the data in the data buffer 36' is cleared, and the reception record of file B on the read request reception table 36 is cleared.

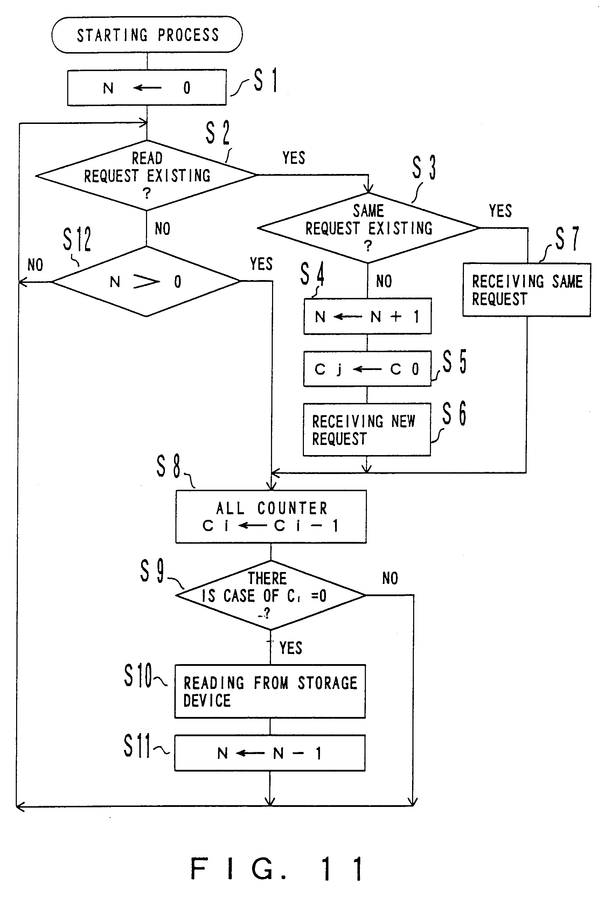

FIG. 11 is a flowchart showing the first embodiment of the operations of the data transfer system shown in FIG. 8, and shows the case in which a read request is made. In the embodiment shown in FIG. 11, all requested files are transmitted when a predetermined time has passed regardless of the frequency value of a read request.

In FIG. 11, N=0 is set in step S1 as an initial value. N refers to the number of files for which read requests are made and which are stored in the read request file number holding unit 64 shown in FIG. 9.

Then, in step S2, it is determined whether or not the clients 31, 32, and 33 shown in FIG. 7 have made read requests. If there is a read request, control is passed to step S3. Unless there are any read requests, control is passed to step S12.

In step S3, it is determined whether or not the currently requested file is the same as any of the already requested files. If there is an identical file, control is passed to step S7. If there is no identical file, control is passed to step S4.

In step S4, since the currently requested file has never been requested before, the number N of read-requested files is incremented by 1.

In steps S5 and S6, the initial value C0 is set as the frequency value Cj of a read request for the file. The frequency of requests before the data is read +1 is set as the initial value C0 (the value is larger by 1 than the initial value described by referring to FIG. 8).

Since it is determined in step S7 that an identical file has already been requested in step S3, control is passed to step S8.

In step S8, 1 is subtracted from the frequency value Ci of a read request for all files.

Then, in step S9, it is determined whether or not any frequency value Ci of a read request indicates 0. If there is a frequency value Ci of a read request indicating 0, control is passed to step S10. Unless there is a frequency value Ci of a read request indicating 0, the processes in and after step S2 are repeatedly performed.

Then, in step S10, the data of a file whose frequency value Ci of a read request indicates 0 is read from the storage device 41.

In step S11, 1 is subtracted from the number N of read-requested files.

Unless there is a read request in step S2, it is determined in step S12 whether or not the number N of read-requested files held in the read request file number holding unit 64 is 0. If the number N of read-requested files is larger than 0 (that is, if the number N of read-requested files is not 0), then the processes in and after step S8 are repeatedly performed. If the number N of read-requested files is 0, then the processes in and after step S2 are repeatedly performed.

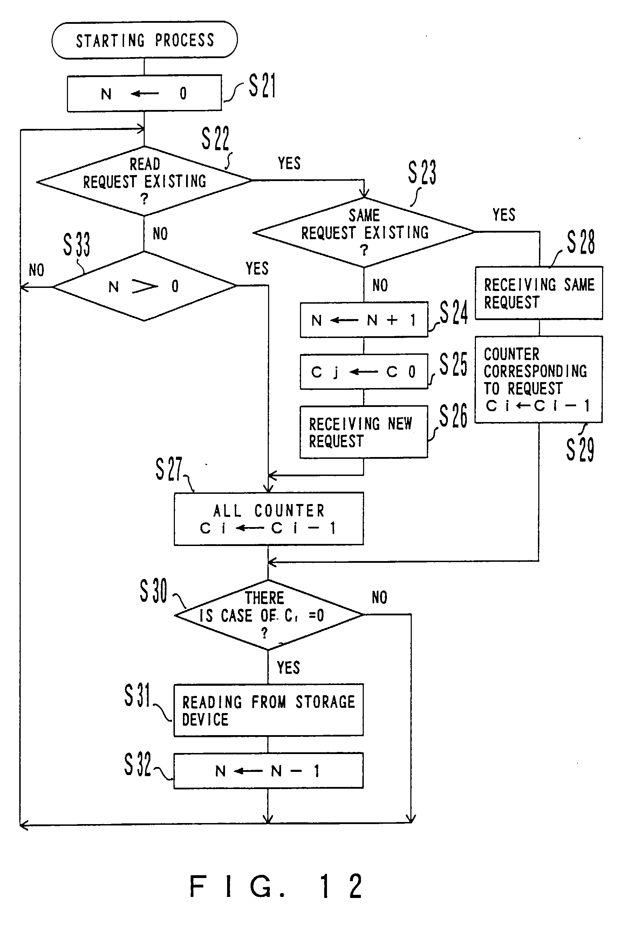

FIG. 12 is a flowchart showing the second embodiment of the operation of the data transfer system shown in FIG. 8. In the embodiment shown in FIG. 12, a requested file is transmitted when the frequency of read requests has reached a predetermined value if the file is frequently requested. A requested file is transmitted if a predetermined time has passed even though the frequency of read requests has not reached a predetermined value if the file is not frequently requested.

In FIG. 12, N=0 is set in step S21 as an initial value. N refers to the number of files for which read requests are made and which are stored in the read request file number holding unit 64 shown in FIG. 9.

Then, in step S22, it is determined whether or not the clients 31, 32, and 33 shown in FIG. 7 have made read requests. If there is a read request, control is passed to step S23. Unless there are any read requests, control is passed to step S33.

In step S23, it is determined whether or not the currently requested file is the same as any of the already requested files. If there is an identical file, control is passed to step S27. If there is no identical file, control is passed to step S24.

In step S24, since the currently requested file has never been requested before, the number N of read-requested files is incremented by 1.

In steps S25 and S26, the initial value C0 is set as the frequency value Cj of a read request for the file, and control is passed to step S27. The frequency of requests + 1 before the data is read is set as the initial value C0.

In step S27, 1 is subtracted from the frequency value Ci of a read request for all files, and control is passed to step S30.

Since it is determined in step S28 that the same file has already been requested in step S23, control is passed to step S29.

In step S29, 1 is subtracted from the frequency value Ci of a read request for the same file for which a read request has been accepted, and control is passed to step S30.

Then, in step S30, it is determined whether or not any frequency value Ci of a read request indicates 0. If there is a frequency value Ci of a read request indicating 0, control is passed to step S31. Unless there is a frequency value Ci of a read request indicating 0, the processes in and after step S22 are repeatedly performed.

Then, in step S31, the data of a file whose frequency value Ci of a read request is 0 is read from the storage device 41.

In step S32, 1 is subtracted from the number N of read-requested files.

Unless there is a read request in step S22, it is determined in step S33 whether or not the number N of read-requested files held in the read request file number holding unit 64 is 0. If the number N of read-requested files is larger than 0, then the processes in and after step S27 are repeatedly performed. If the number N of read-requested files is 0, then the processes in and after step S22 are repeatedly performed.

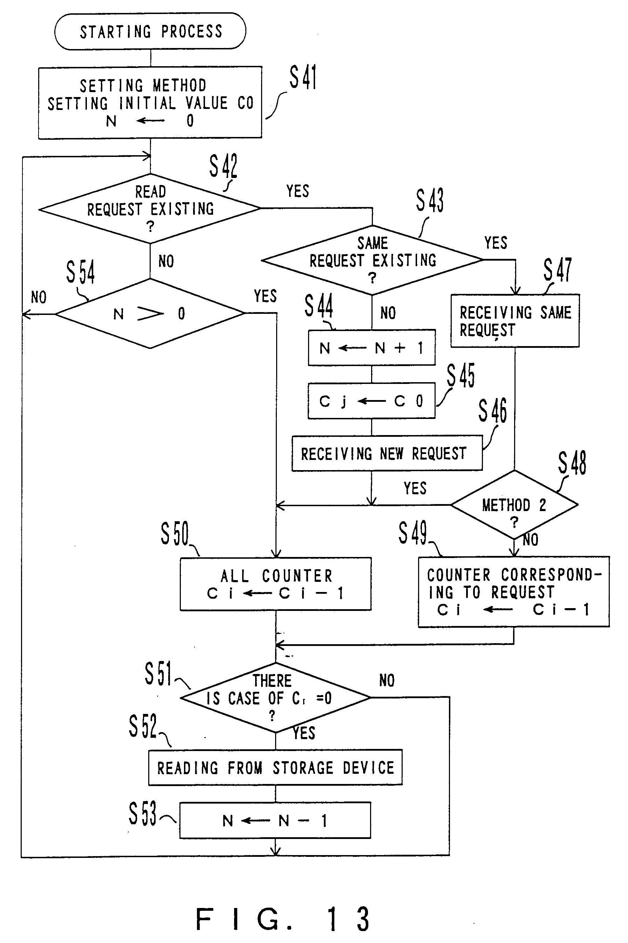

FIG. 13 is a flowchart showing the third embodiment of the operation of the data transfer system shown in FIG. 8.

In the example shown in FIG. 13, either the full-video-on-demand method or the near-video-on-demand method can be selected in addition to the method explained by referring to FIG. 12.

In the video-on-demand (VOD) method, requested video data is transmitted to a requesting user at a request transmitted through the terminal device called a set top box (STB) provided in each home from the cable television center (CATV center) accumulating pictures having a plurality of titles.

A video-on-demand can be a full-video-on-demand (FVOD) or a near-video-on-demand (NVOD).

In the full-video-on-demand method, a requested video program can be immediately obtained upon request from the user. When the user requests for a video program, the requested video program is immediately broadcast. The user can exclusively watch a video program, and can not only replay the video program but also fast-forward, rewind, and temporarily stop the video program as operating a video tape recorder or a video disk. To realize these functions, each user individually uses an exclusive channel in the full-video-on-demand method.

On the other hand, the near-video-on-demand method is also referred to as a time-shift service, and a single video program is broadcast along a plurality of channels at different times at predetermined time intervals. For example, a 2-hour video program is provided at 1-minute intervals using a stream for 120 channels. Thus, the user can watch a requested video program from the beginning by waiting for 1 minute at most.

In FIG. 13, N=0 is set in step S41 as an initial value. N refers to the number of files for which read requests are made and which are stored in the read request file number holding unit 64 shown in FIG. 9. The initial value C0 is set, and a method is selected. The method can be selected from methods 1 through 3. Method 1 is a full-video-on-demand method. Method 2 is a near-video-on-demand method. Method 3 transmits a file for which the frequency of read requests has reached a predetermined value. When method 1, that is, the full-video-on-demand, is selected, the initial value C0 is set to 1. When method 2, that is, the near-video-on-demand method, is selected, the initial value C0 is set as a value corresponding to a predetermined time before reading data. When method 3 is selected, the initial value C0 is set to the frequency of read requests before reading data + 1.

Then, in step S42, it is determined whether or not the clients 31, 32, and 33 shown in FIG. 7 have made read requests. If there is a read request, control is passed to step S43. Unless there are any read requests, control is passed to step S54.

In step S43, it is determined whether or not the currently requested file is the same as any of the already requested files. If there is an identical file, control is passed to step S47. If there is no identical file, control is passed to step S44.

In step S44, since the currently requested file has never been requested before, the number N of read-requested files is incremented by 1.

In steps S45 and S46, the initial value C0 is set as the frequency value Cj of a read request for the file, and control is passed to step S50.

In step S50, 1 is subtracted from the frequency value Ci of a read request for all files, and control is passed to step S51.

Since it is determined in step S47 that the same file has already been requested in step S43, control is passed to step S48.

In step S48, it is determined whether or not method 2 has been selected in step S41. If method 2 is selected, then control is passed to step S50. If method 1 or 3 is selected, control is passed to step S49.

In step S49, 1 is subtracted from the frequency value Ci of a read request for the same file for which a read request has been accepted, and control is passed to step S51.

Then, in step S51, it is determined whether or not any frequency value Ci of a read request indicates 0. If there is a frequency value Ci of a read request indicating 0, control is passed to step S51. Unless there is a frequency value Ci of a read request indicating 0, the processes in and after step S42 are repeatedly performed.

If method 1 is selected in step S41, then the initial value C0 is set to 1, and 1 is subtracted from the frequency Ci of a read request, obtaining the difference 0 in step S50. Therefore, it is determined 'yes' constantly in step S51. If method 1 is selected, then a newly requested file is always read from the storage device 41 in step S52 and the newly requested file can be immediately transmitted.

Then, in step S52, the data of a file whose frequency value Ci of a read request is 0 is read from the storage device 41.

In step S53, 1 is subtracted from the number N of read-requested files.

Unless there is a read request in step S42, it is determined in step S54 whether or not the number N of read-requested files held in the read request file number holding unit 64 is 0. If the number N of read-requested files is larger than 0, then the processes in and after step S50 are repeatedly performed. If the number N of read-requested files is 0, then the processes in and after step S42 are repeatedly performed.

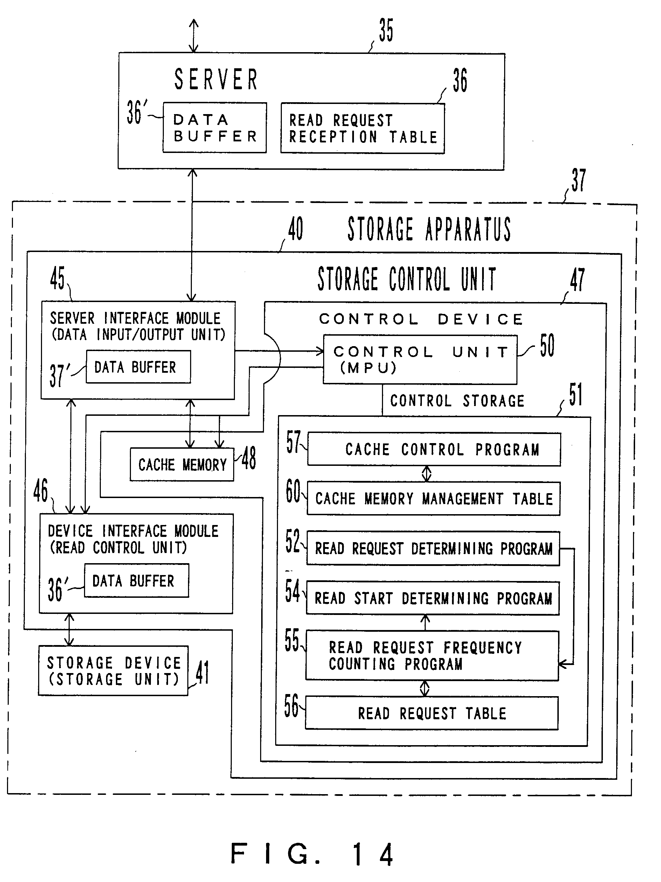

FIG. 14 is a block diagram showing the configuration of the data transfer system according to the second embodiment of the present invention.

According to the embodiment shown in FIG. 14, a large volume of serial data is to be read with a high possibility when a request is made to access the storage apparatus 37. Therefore, cache memory 48 is provided in the storage apparatus 37 to transfer data (hit transfer) from the cache memory 48, thereby improving the data providing ability.

As a result, the cache memory 48 is added to the configuration shown in FIG. 8 according to the embodiment shown in FIG. 14.

That is, in FIG. 14, 35 shows a server, 36 shows a read request reception table, 36' shows a data buffer, 40 shows a storage control unit, 41 shows a storage device, 45 shows a server interface module, 46 shows a device interface module, 48 shows a cache memory, 50 shows a control unit (MPU), 51 shows a control storage, 52 shows a read request determining program, 54 shows a read start determining program, 55 shows a read request frequency counting program, 56 shows a read request table, 57 shows a cache control program for controlling the cache memory 48, and 60 shows a cache memory management table for managing the cache memory 48.

The operation according to the embodiment shown in FIG. 14 is the same as the operation according to the embodiment shown in FIG. 8 except the operations relating to the cache memory 48. That is, the cache memory management table 60 comprises a file management table for use in managing the priority of a file to be stored in the cache memory 48; and a block management table for use in managing the priority in storing a block for each file.

Upon receipt of a read request for a file from a client, the server 35 records a file for which a read request has been made corresponding to the requesting client on the read request reception table 36. Then, the file read request is transferred from the server 35 to the server interface module 45 of the storage apparatus 37. The server interface module 45 receives the file read request.

The control device 47 determines that the read request has been made through the control unit 50 and the read request determining program 52, activates the cache control program 57, and assigns the highest priority to the file requested by a client, among all files managed on the file management table, for storage in the cache memory 48. Among the blocks in the files managed by the block management table 24, the last read-requested block is assigned the highest priority, and the oldest read-requested block is assigned the lowest priority.

When there is no block areas to write new data in the cache memory 48, a file whose block is to be deleted is selected from lowest priority. Blocks of the files to be thus deleted are removed from the lowest priority.

The control device 47 activates the read request frequency counting program 55, and updates the read frequency of the requested file. The read start determining program 54 determines whether or not there is a file whose read frequency has reached a predetermined value or a file for which a predetermined time has passed since a read request was made for the file. The file whose read frequency has reached a predetermined value or a file for which a predetermined time has passed since a read request was made for the file are defined as read start files. If read start files have been defined, the file management table of the cache memory management table 60 is referred to and it is checked whether or not the read start file is entered in the file management table.

When a read start file is entered in the file management table, the control unit 50 instructs the server interface module 45 to read the read start file from the cache memory 48. The server interface module 45 reads the read start file from the cache memory 48 and transmits the file to the server 35.

If the read start file has not been entered in the file management table, the control unit 50 instructs the device interface module 46 to read the read start file from the storage device 41. The device interface module 46 reads the read start file from the storage device 41 and transmits the file to the server interface module 45. The server interface module 45 transmits the read start file received from the device interface module 46 to the server 35.

Since the cache control program 57 stores the file for which the latest read request has been made in the cache memory 48 by priority, a file for which a read request is frequently made is frequently read from the cache memory 48. On the other hand, a file for which no read request were made or a file for which a read request was once made but no subsequent requests were made is not stored in the cache memory 48. Therefore, such a file is likely to be read from the storage device 41.

The server 35 holds the data of the read start file received from the server interface module 45 in the data buffer 36'. Then, the server 35 refers to the read request reception table 36, and transfers the data of the read start file to the client recorded on the read request reception table 36. When all data have been completely transferred to each client, the data in the data buffer 36' is cleared, and the reception record of the read request file on the read request reception table 36 is cleared.

When the cache memory 48 stores serial data to be accessed in series, the cache control program 57 checks the access states of the serial data. If the cache memory 48 stores a part of the blocks of the file containing the serial data to be accessed in series, and if a block before the block stored by the cache memory 48 is accessed, the accessed file is assigned the highest priority.

Furthermore, the blocks are stored in the cache memory 48 from the block a predetermined number of blocks after the access-requested block to one block before the block stored in the cache memory 48 without deleting the block stored in the cache memory 48.

Thus, if the cache memory 48 has not stored the access-requested block, then the block after the access-requested block is preliminarily read and stored in the cache memory 48. As a result, multimedia data such as movie and music data can be read together with the blocks after the access-requested block with a high possibility when the accessed-requested block is read. Therefore, it is possible to cache-hit the blocks after the access-requested block, thereby improving the data transfer efficiency.

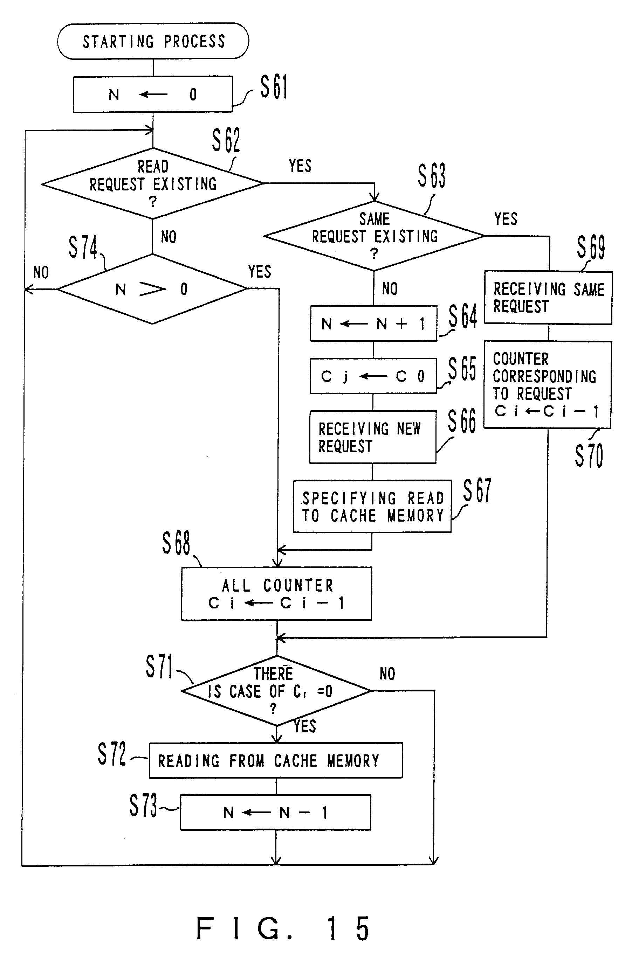

FIG. 15 is a flowchart showing the operation according to the first embodiment of the data transfer system shown in FIG. 14. The embodiment shown in FIG. 15 is realized by adding the reading operation performed by the cache memory 48 to the embodiment shown in FIG. 12.

In FIG. 15, the number N of read-requested files is set to 0 in step S61.

Then, in step S62, it is determined whether or not a client has made a request to read a file. If there is a read request for a file, control is passed to step S63. If there are no read requests for a file, then control is passed to step S74.

In step S63, it is determined whether or not the requested file matches a file for which a read request has already been made. If a read request has been already made for the same file, then control is passed to step S68. If a read request has not been made for the same file, then control is passed to step S64.

In step S64, since it is determined in step S63 that the currently requested file has never been requested before, the number N of read-requested files is incremented by 1.

In steps S65 and S66, the initial value C0 is set as the frequency value Cj of a read request for the file, and control is passed to step S67. The initial value C0 is set to the frequency of read requests before reading data + 1.

In step S67, an instruction to read to the cache memory 48 a file for which a read request has been newly made. At this time, the newly read-requested file is assigned the highest priority for storage in the cache memory 48. If the storage area for the newly read-requested file is not available in the cache memory 48, the file assigned the lowest priority is first removed from the cache memory 48 and then the newly requested file is stored in the cache memory 48.

In step S68, 1 is subtracted from the frequency value Ci of a read request for all files, and control is passed to step S71.

Since it is determined in step S69 that the same file has already been requested in step S63, control is passed to step S70.

In step S70, 1 is subtracted from the frequency value Ci of a read request for the same file for which a read request has been accepted, and control is passed to step S71.

Then, in step S71, it is determined whether or not any frequency value Ci of a read request indicates 0. If there is a frequency value Ci of a read request indicating 0, control is passed to step S72. Unless there is a frequency value Ci of a read request indicating 0, the processes in and after step S62 are repeatedly performed.

Then, in step S72, the data of a file whose frequency value Ci of a read request is 0 is read from the cache memory 48. If the data of the file whose frequency value Ci of a read request is 0 is not held in the cache memory 48, then the data of the file whose frequency value Ci of a read request is 0 is read from the storage device 41.

In step S73, 1 is subtracted from the number N of read-requested files.

Unless there is a read request in step S62, it is determined in step S74 whether or not the number N of read-requested files is 0. If the number N of read-requested files is larger than 0, then the processes in and after step S68 are repeatedly performed. If the number N of read-requested files is 0, then the processes in and after step S62 are repeatedly performed.

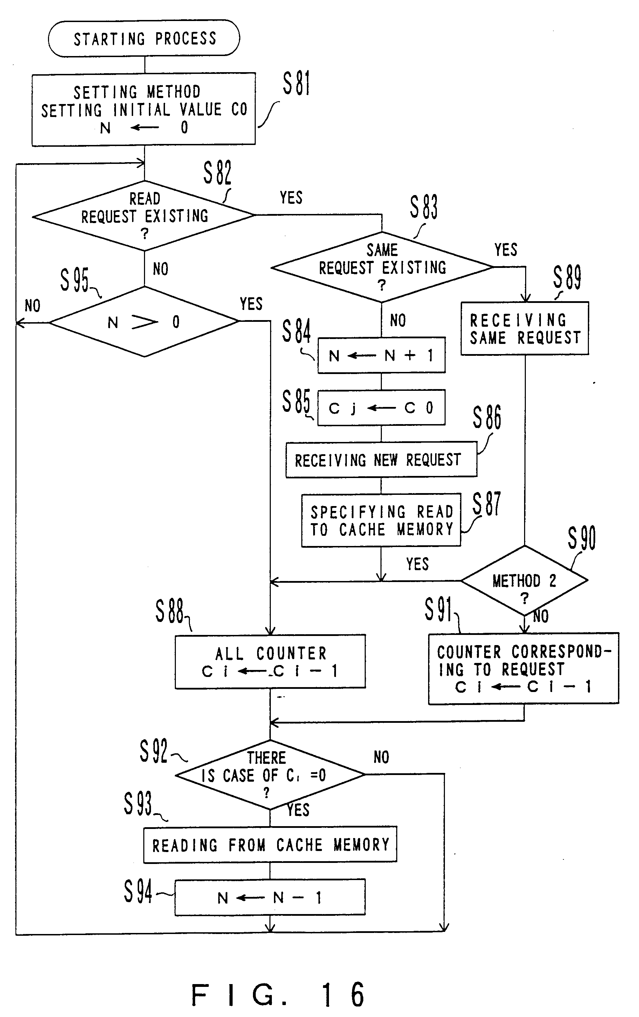

FIG. 16 is a flowchart showing the operation according to the second embodiment of the data transfer system shown in FIG. 14. The embodiment shown in FIG. 16 is realized by adding the reading operation performed by the cache memory 48 to the embodiment shown in FIG. 13.

In FIG. 16, the number N of read-requested files is set to 0 as an initial value in step S81. The initial value C0 is set, and a method is selected. The method can be selected from methods 1 through 3. Method 1 is a full-video-on-demand method. Method 2 is a near-video-on-demand method. Method 3 transmits a file for which the frequency of read requests has reached a predetermined value. When method 1, that is, the full-video-on-demand, is selected, the initial value C0 is set to 1. When method 2, that is, the near-video-on-demand method, is selected, the initial value C0 is set as a value corresponding to a predetermined time before reading data. When method 3 is selected, the initial value C0 is set to the frequency of read requests before reading data + 1.

Then, in step S82, it is determined whether or not a client has made a read request. If there is a read request, control is passed to step S83. Unless there are any read requests, control is passed to step S95.

In step S83, it is determined whether or not the currently requested file is the same as any of the already requested files. If there is an identical file, control is passed to step S88. If there is no identical file, control is passed to step S84.

In step S84, since the currently requested file has never been requested before in step S83, the number N of read-requested files is incremented by 1.

In steps S85 and S86, the initial value C0 is set as the frequency value Cj of a read request for the file, and control is passed to step S87.

In step S87, an instruction to read to the cache memory 48 a file for which a read request has been newly made. At this time, the newly read-requested file is assigned the highest priority for storage in the cache memory 48. If the storage area for the newly read-requested file is not available in the cache memory 48, the file assigned the lowest priority is first removed from the cache memory 48 and then the newly requested file is stored in the cache memory 48.

In step S88, 1 is subtracted from the frequency value Ci of a read request for all files, and control is passed to step S51.

Since it is determined in step S89 that an identical file has already been requested in step 83, control is passed to step S90.

In step S90, it is determined whether or not method 2 has been selected in step S81. If method 2 is selected, then control is passed to step S88. If method 1 or 3 is selected, control is passed to step S91.

In step S91, 1 is subtracted from the frequency value Ci of a read request for the same file for which a read request has been accepted, and control is passed to step S92.

Then, in step S92, it is determined whether or not any frequency value Ci of a read request indicates 0. If there is a frequency value Ci of a read request indicating 0, control is passed to step S93. Unless there is a frequency value Ci of a read request indicating 0, the processes in and after step S82 are repeatedly performed.

Then, in step S93, the data of a file whose frequency value Ci of a read request is 0 is read from the cache memory 48. If the data of the file whose frequency value Ci of a read request is 0 is not held in the cache memory 48, then the data of the file whose frequency value Ci of a read request is 0 is read from the storage device 41.

In step S94, 1 is subtracted from the number N of read-requested files.

Unless there is a read request in step S82, it is determined in step S95 whether or not the number N of read-requested files is 0. If the number N of read-requested files is larger than 0, then the processes in and after step S88 are repeatedly performed. If the number N of read-requested files is 0, then the processes in and after step S82 are repeatedly performed.

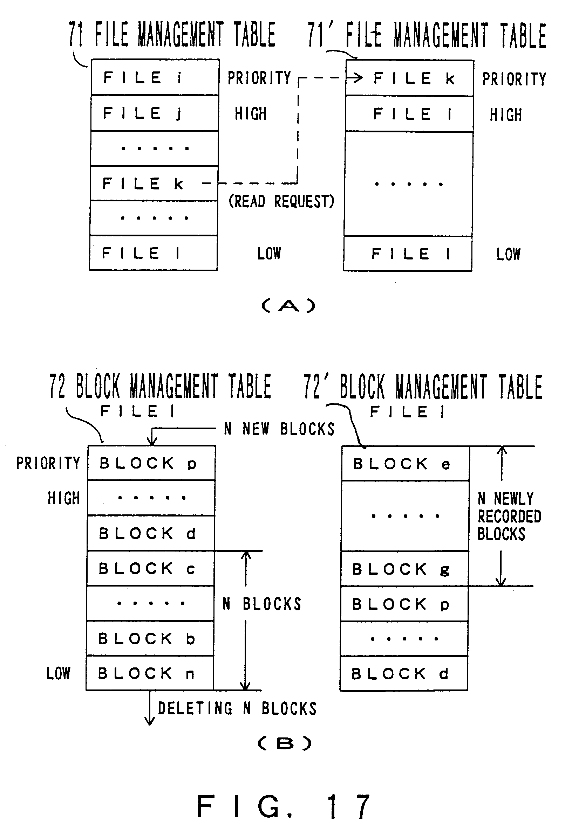

FIG. 17 shows the method of controlling the cache memory according to an embodiment of the present invention. FIG. 17(A) shows the method of managing a file in the LRU method, and FIG. 17(B) shows the method of managing a file in the FIFO method.

In FIG. 17(A), 71 and 71' show file management tables. In FIG. 17(B), 72 and 72' show block management tables.

The file management table 71 stores file i, file j, ..., file k, ..., and file l. File i is assigned the highest priority, and file l is assigned the lowest priority. If a read request for file k is made in this state of the file management table 71, the file management table 71' is generated with file k assigned the highest priority.

Thus, the files are managed in the LRU method with the most recently-read file assigned the highest priority and the first read file assigned the lowest priority.

When blocks are deleted from the cache memory, the file management table 71 is referred to, and the blocks are sequentially deleted from the leading block of the least frequently used file l. That is, in FIG. 17(B), the block management table 72 of file l stores block p, ..., block d, block c, ..., block b, and block n. Block p is assigned the highest priority, and block n is assigned the lowest priority. When the blocks are deleted, they are sequentially deleted from block n assigned the lowest priority and then block b assigned the second lowest priority.

Thus, there is a low possibility that blocks in a frequently used file are deleted, thereby improving the possibility of a hit transfer.

The blocks are deleted from the cache memory in the FIFO method or the LRU method. If only the last half portion of a file is in the cache memory, and if a read request for the first half of the file is made, then the blocks in the first half of the file after the read-requested block are stored by priority in the cache memory, thereby heightening the possibility of a hit transfer.

When blocks are managed by the FIFO method. the entry (record) of the last read-requested file is assigned the highest priority. When the blocks are managed by the LRU method, the entry of the read-requested block is moved to the position with the highest priority.

The block management method by the FIFO method is described below by referring to FIG. 17(B).

Described below is the method of deleting a block from the cache memory and storing N blocks of a read-requested file in the cache memory.

First, at a read request for N blocks, the file management table 71 shown in FIG. 17(A) is referred to, and an entry of a file assigned lower priority is detected in the cache memory.

The block management table 72 for managing in block units a file assigned the lowest priority and obtained by referring to the file management table 71 is then referred to so that N blocks assigned lower priority can be selected. In the example shown in FIG. 17(B), block c, ..., block b, and block n are selected. The selected block c, ..., block b, and block n are sequentially deleted from the cache memory.

Then, the contents of the read-requested N blocks are stored in the cache memory which stored the deleted N blocks. In the example shown in FIG. 17(B), block e, ..., and block g are stored in the cache memory. At this time, the block management table 72 of file l is updated to the block management table 72' with block e, ..., and block g assigned high priority while block p, ..., and block d assigned low priority.

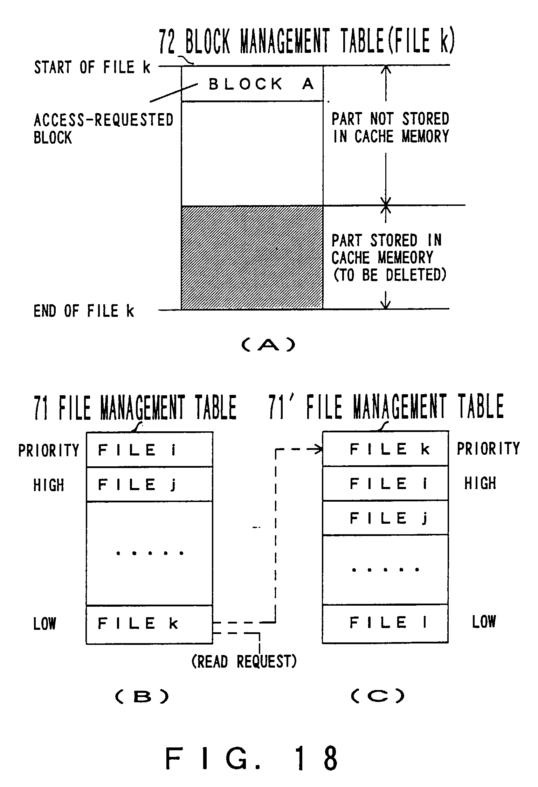

FIG. 18 shows the method of managing the blocks in the cache memory according to an embodiment of the present invention. The embodiment shown in FIG. 18 is to prevent the blocks in a file to be used from being insignificantly deleted from the cache memory.

In FIG. 18, 71 and 71' show file management tables, and 72 shows a block management table of file k.

First, access conditions to a file is checked when the file is deleted from the cache memory.

If access is gained to a block before the block to be deleted, then the deletion of the block in the file is stopped. For example, assume that blocks in file k are stored in the cache memory from the middle to the end of file k in FIG. 18(A), and that the blocks from the middle to the end of file k are to be deleted from the cache memory. At this time, if an access request is made for the leading block A of file k, then the blocks from the middle to the end of file k are stopped from being deleted from the cache memory.

If the deletion of blocks is suspended, then the entry of the file is moved to the position assigned the highest priority on the file management table for managing the file unit. For example, in FIG. 18(B), the file management table 71 stores file i, file j, ..., and file k with file i assigned the highest priority and file k assigned the lowest priority. When the deletion of blocks in file k from the cache memory is suspended, the file management table 71 is updated to the file management table 71' with file k assigned the highest priority on the file management table 71 as shown in FIG. 18(C).

If no access requests are made to the block followed by the block to be deleted, then the block to be deleted is actually deleted. For example, assume that blocks in file k are stored in the cache memory from the middle to the end of file k in FIG. 18(A), and that the blocks from the middle to the end of file k are to be deleted from the cache memory. At this time, if an access request is not made for the leading block A of file k, then the blocks from the middle to the end of file k are deleted from the cache memory.

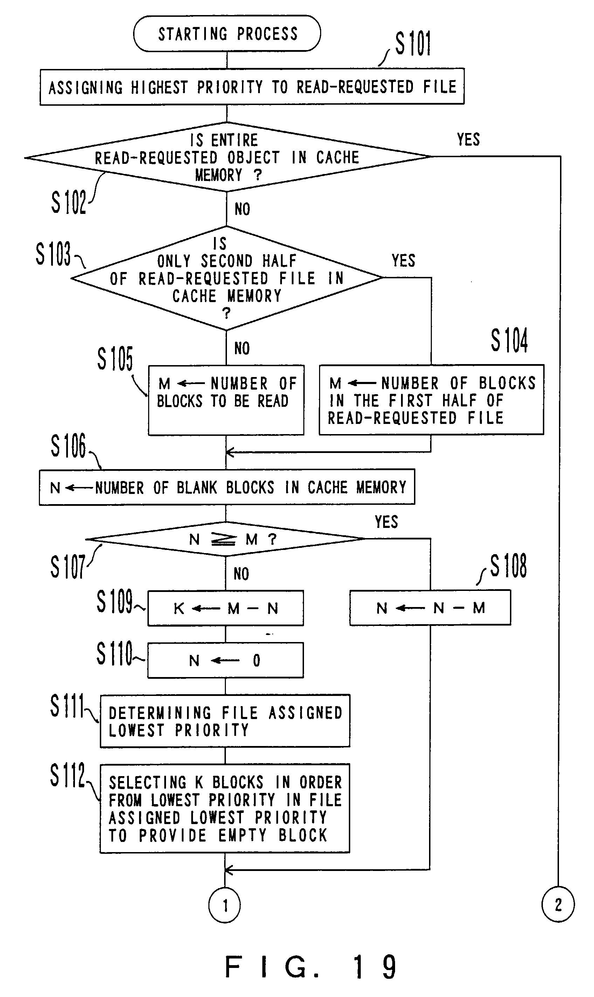

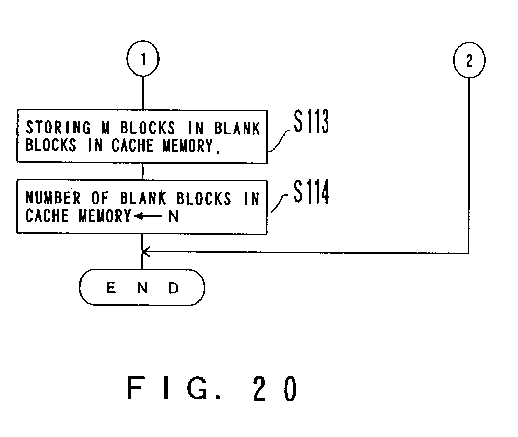

FIGs. 19 and 20 are flowcharts showing the methods of controlling the cache memory according to an embodiment of the present invention.

In FIG. 19, when a read request is made for a file in step S101, the read-requested file is assigned the highest priority on the file management table

Then, it is determined in step S102 whether or not the entire data of the file to be read is stored in the cache memory. If 'yes', the process terminates. If 'no', control is passed to step S103.

It is then determined in step S103 whether or not only the last half of the entire data of the file to be read is stored in the cache memory. If 'yes', control is passed to step S104 and the number M of the blocks to be stored is set as the number of blocks of the first half of the file to be read.

If 'no' in step S103, control is passed to step S105 and the number M of the blocks to be stored is set as the number of blocks of the file to be read.

Next, in step S106, the number N of blank blocks in the cache memory is set.

Then, in step S107, the number N of blank blocks in the cache memory is compared with the number M of blocks to be stored in the cache memory. If the number N of blank blocks in the cache memory is equal to or larger than the number M of blocks to be stored in the cache memory, then control is passed to step S108, and the value obtained by subtracting the number M of blocks to be stored in the cache memory from the number N of blank blocks in the cache memory is set as the number N of blank blocks in the cache memory. Then, control is passed to step S113 shown in FIG. 20.

On the other hand, if the number N of blank blocks in the cache memory is smaller than the number M of blocks to be stored in the cache memory in step S107, then control is passed to step S109, and the value obtained by subtracting the number N of blank blocks in the cache memory from the number M of blocks to be stored in the cache memory is set as the number K of blocks to be deleted. Then, control is passed to step S110.

Then, in step S110, the number N of blank blocks in the cache memory is set to 0.

Next, in step S111, the file management table is referred to and the file assigned the lowest priority is determined.

In step S112, blank block are reserved in the cache memory by sequentially selecting K blocks from the lowest priority in the file assigned the lowest priority, and by deleting the selected K blocks from the cache memory.

Then, in step S113 shown in FIG. 20, M blocks are stored in the blank blocks in the cache memory.

In step S114, N is set as the number of blank blocks in the cache memory.

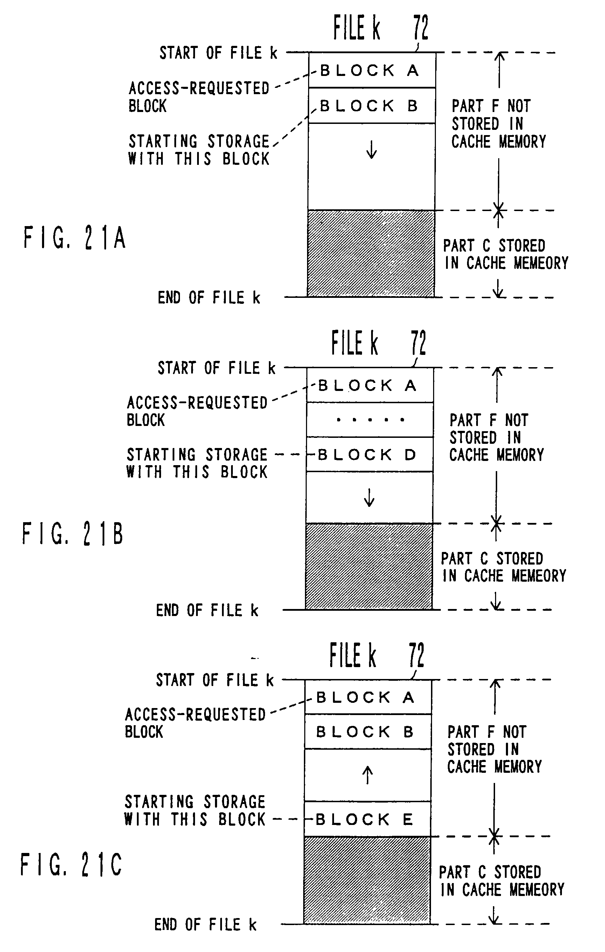

FIG. 21A shows the method of storing the blocks in the cache memory according to the first embodiment of the present invention. According to the embodiment shown in FIG. 21A, if data in a block is stored in the cache memory and access is gained to a block before the block containing the data when sequentially accessed serial data is stored, the blocks are stored from the next block after the access-requested block to one block before the block stored in the cache memory.

When only the last half of the read file is in the cache memory, a read request is made for the first half of the file. For example, in FIG. 21A, the data in file k includes a part C stored in the cache memory and a part F not stored in the cache memory. The part F not stored in the cache memory corresponds to the first half of file k while the part C stored in the cache memory corresponds to the last half of file k.

Assume that an access request is made for the first block A of file k. By the read request for block A of file k, there is a high possibility that the part C of file k stored in the cache memory may be read-requested. Therefore, the part C of file k stored in the cache memory is not deleted.

Then, the blocks from the read-requested block to the block before part C are stored by priority in the cache memory. For example, in FIG. 21A, when multimedia data such as movie and music data in block A in file k is read-requested, there is a high possibility that block B after block A in file k to the block immediately before the part C stored in the cache memory may be read-requested. Therefore, the blocks from block B in file k to the block immediately before the part C stored in the cache memory are sequentially read and stored in the cache memory.

FIG. 21B shows the method of storing the blocks in the cache memory according to the second embodiment of the present invention. According to the embodiment shown in FIG. 21B, if data in a block is stored in the cache memory and access is gained to a block before the block containing the data when sequentially accessed serial data is stored, the blocks are stored from a predetermined number of blocks after the access-requested block to one block before the block stored in the cache memory.

When only the last half of the read file is in the cache memory, a read request is made for the first half of the file. For example, in FIG. 21B, the data in file k includes a part C stored in the cache memory and a part F not stored in the cache memory. The part F not stored in the cache memory corresponds to the first half of file k while the part C stored in the cache memory corresponds to the last half of file k.

Assume that an access request is made for block A of file k. By the read request for block A of file k, there is a high possibility that the part C of file k stored in the cache memory may be read-requested. Therefore, the part C of file k stored in the cache memory is not deleted.

Then, the blocks from the read-requested block to the block before the part C are stored by priority in the cache memory. For example, in FIG. 21B, when multimedia data such as movie and music data in block A in file k is read-requested, there is a high possibility that block B after block A in file k to the block immediately before the part C stored in the cache memory may be read-requested. Some blocks after block A in file k are immediately read and transmitted. Therefore, the blocks from block D immediately after block A in file k to the block immediately before the part C stored in the cache memory are sequentially read and stored in the cache memory.

FIG. 21C shows the method of storing the blocks in the cache memory according to the third embodiment of the present invention. According to the embodiment shown in FIG. 21C, if data in a block is stored in the cache memory and access is gained to a block before the block containing the data when sequentially accessed serial data is stored, data is sequentially stored in the blocks in the inverse direction from one block before the already stored block to the read-requested block.

When only the last half of the read file is in the cache memory, a read request is made for the first half of the file. For example, in FIG. 21C, the data in file k includes a part C stored in the cache memory and a part F not stored in the cache memory. The part F not stored in the cache memory corresponds to the first half of file k while the part C stored in the cache memory corresponds to the last half of file k.

Assume that an access request is made for the first block A of file k. By the read request for block A of file k, there is a high possibility that the part C of file k stored in the cache memory may be read-requested. Therefore, the part C of file k stored in the cache memory is not deleted.

Then, the blocks from the read-requested block to the block before the part C are stored by priority in the cache memory. For example, in FIG. 21C, when multimedia data such as movie and music data in block A in file k is read-requested, there is a high possibility that block B after block A in file k to the block immediately before the part C stored in the cache memory may be read-requested. Therefore, the blocks from block B in file k to the block immediately before the part C stored in the cache memory are stored in the cache memory. Since the blocks are sequentially transmitted from block B in file k, preliminarily read blocks are read and stored in the cache memory in the inverse direction from block E immediately before the part C stored in the cache memory to the leading block A in file k.

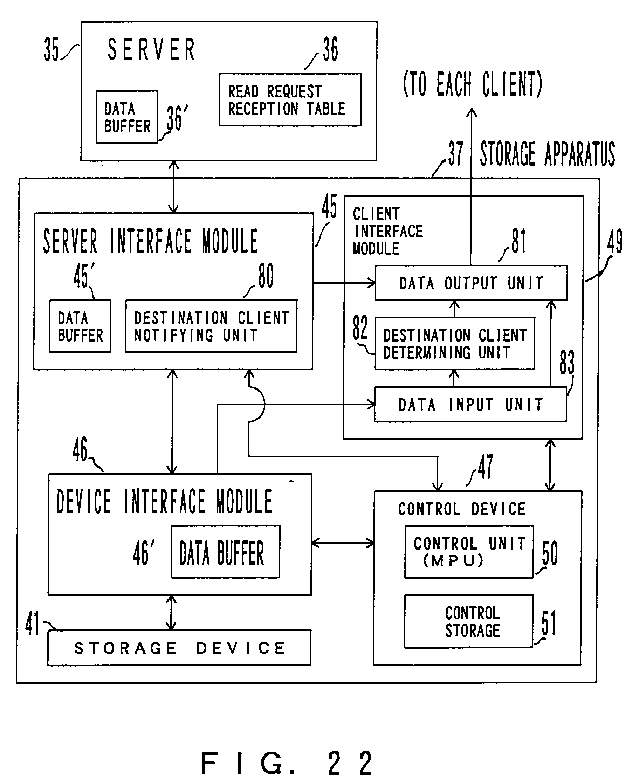

FIG. 22 is a block diagram showing the configuration of the data transfer system according to the third embodiment of the present invention. The configuration shown in FIG. 22 is realized by adding a client interface module 49 to the configuration shown in FIG. 8 to directly transfer the data read from the storage apparatus 37 to the client.

In FIG. 22, 35 shows a server, 36 shows a read request reception table, 36', 45', and 46' show data buffers, 37 shows a storage apparatus, 41 shows a storage device, 45 shows a server interface module, 46 shows a device interface module, 47 shows a control device, 49 shows a client interface module, 50 shows a control unit (MPU), 51 shows a control storage, 80 shows a destination client notifying unit, 81 shows a data output unit, 82 shows a destination client determining unit, and 83 shows a data input unit.

Upon receipt of a read request for a file from a client, the server 35 records a file for which a read request has been made corresponding to the requesting client on the read request reception table 36. Then, the file read request is transferred from the server 35 to the server interface module 45 of the storage apparatus 37. The server interface module 45 receives the file read request.

The control device 47 determines whether or not there is a file whose read frequency has reached a predetermined value or a file for which a predetermined time has passed since a read request was made for the file. The file whose read frequency has reached a predetermined value or a file for which a predetermined time has passed since a read request was made for the file are defined as read start files. If read start files have been defined, the control unit 50 instructs the device interface module 46 to read a read start file from the storage device 41. The device interface module 46 reads the read start file from the storage device 41, the transmits the read data to the data input unit 83 of the client interface module 49.

The control unit 50 instructs the destination client notifying unit 80 of the server interface module 45 to notify the client interface module 49 of the contents of the read request reception table 36.

The client interface module 49 receives the contents of the read request reception table 36 from the destination client notifying unit 80, and determines the destination client of the read start file through the destination client determining unit 82. The read start file is transmitted to the client requesting the read start file through the data output unit 81.

Thus, according to the embodiment shown in FIG. 22, the data read from the storage device 41 can be directly transferred to each client through the client interface module 49, thereby reducing the load on the server 35 and shortening the time required to transfer the data read from the storage device 41 to each client.

FIG. 23 is a block diagram showing the configuration of the data transfer system according to the fourth embodiment of the present invention. The configuration shown in FIG. 23 is obtained by adding the cache memory 48 to the configuration shown in FIG. 22. When data is transferred using the cache memory 48, a physical or logical block in the storage device 41 can be used as a substitute unit in the cache memory 48. When new data is stored in the cache memory 48, it is stored in the cache memory 48 if available. If there are no blank areas in the cache memory 48, an appropriate block is deleted from the cache memory 48 to reserve a blank area for the new block.

If serial data (file) in a block is managed in the cache memory 48 simply in block units, the blocks are deleted from the leading block in a file. Therefore, if a block is deleted after a file read request has been made, the block of the read-requested file may be deleted. In such a case, a hit transfer cannot be performed, thereby reducing the data providing ability. To avoid this, a cache management table 85 is provided according to the embodiment shown in FIG. 23, and a blank area in the cache memory 48 can be managed both in file units and block units.

If data in a block is stored in the cache memory 48 and access is gained to a block before the block containing the data when sequentially accessed serial data is stored and the access conditions of the serial data are checked, then the current file is assigned the highest priority.

The blocks are stored in the cache memory 48 from either the block immediately after the accessed block or the block a predetermined number of blocks after the accessed block to one block before the block stored in the cache memory 48 without deleting the block in the accessed file. Otherwise, the blocks are stored in the inverse order from one block before the block stored in the cache memory 48 to the read-requested block.

In FIG. 23, 35 shows a server, 36 shows a read request reception table, 36', 45', and 46' show data buffers, 37 shows a storage apparatus, 41 shows a storage device, 45 shows a server interface module, 46 shows a device interface module, 48 shows a cache memory, 49 shows a client interface module, 50 shows a control unit (MPU), 51 shows a control storage, 80 shows a destination client notifying unit, 81 shows a data output unit, 82 shows a destination client determining unit, 83 shows a data input unit, 84 shows a cache control program, and 85 shows a cache management table.

Upon receipt of a read request for a file from a client, the server 35 records a file for which a read request has been made corresponding to the requesting client on the read request reception table 36. Then, the file read request is transferred from the server 35 to the server interface module 45 of the storage apparatus 37. The server interface module 45 receives the file read request.

The control device 47 determines that a read request has been made by the control unit 50, activates the cache control program 84, and assigns to the file requested by the client the highest priority for storage in the cache memory 48 in the files managed by the cache management table 85. In the blocks in each file managed by the cache management table 85, the last read-requested block is assigned the highest priority while the first read-requested block is assigned the lowest priority.

When there is no block areas in the cache memory 48 to write new data in, a file block deletion order is determined from the lowest priority to the highest priority. According to the determined file-deletion order, blocks are deleted in order from the lowest priority.

The control device 47 determines whether or not there is a file whose read frequency has reached a predetermined value or a file for which a predetermined time has passed since a read request was made for the file. The file whose read frequency has reached a predetermined value or a file for which a predetermined time has passed since a read request was made for the file are defined as read start files. If read start files have been defined, the control device 47 refers to the cache management table 85, and checks whether or not the read start file is entered in the cache management table 85.

If the read start file is entered in the cache management table 85, the control unit 50 instructs the client interface module 49 to read the read start file from the cache memory 48. The client interface module 49 reads the read start file from the cache memory 48 and inputs the file in the data input unit 83.

The control unit 50 instructs the destination client notifying unit 80 of the server interface module 45 to notify the client interface module 49 of the contents of the read request reception table 36.

The client interface module 49 receives the contents of the read request reception table 36 from the destination client notifying unit 80, and determines the destination client of the read start file through the destination client determining unit 82. The read start file is transmitted to the client requesting the read start file through the data output unit 81.

If the read start file is not entered in the cache management table 85, the control unit 50 instructs the device interface module 46 to read the read start file from the storage device 41. The device interface module 46 reads the read start file from the storage device 41 and transmits the file to the data input unit 83 of the client interface module 49.

The control unit 50 instructs the destination client notifying unit 80 of the server interface module 45 to notify the client interface module 49 of the contents of the read request reception table 36.

When the client interface module 49 receives the contents of the read request reception table 36 from the destination client notifying unit 80, it determines through the destination client determining unit 82 the destination client of the read start file. Then, the client interface module 49 transmits the read start file to the client requesting the read start file through the data output unit 81.

By activating the cache control program 85, the control unit 50 checks the access conditions of sequentially-accessed serial data when the data is stored in the cache memory 48.

If a part of blocks in the file containing the sequentially-accessed serial data are stored in the cache memory 48, and if access is gained to the block before the block stored in the cache memory 48, then the accessed file is assigned the highest priority. Then, without deleting the blocks stored in the cache memory 48, the blocks are stored in the cache memory 48 from the block a predetermined number of blocks after the access-requested block to one block before the blocks stored in the cache memory 48.

Thus, according to the embodiment shown in FIG. 23, the data read from the cache memory 48 can be directly transferred to each client through the client interface module 49, thereby reducing the load to the server 35, storage device 41, server interface module 45, and device interface module 46, and also shortening the time required to transfer the data read from the cache memory 48 to each client.

As described above, even if a plurality of requests are simultaneously made to read data in the same file in the storage apparatus storing a large volume of serial data, the data can be transferred to each requesting client by a single reading operation according to the embodiments of the present invention. Therefore, the efficiency in reading data from the storage apparatus can be considerably improved.

According to an aspect of the present invention, when a large volume of serial data is read, the operations are controlled in consideration of the features and tendencies when a large volume of serial data in the cache memory is processed. As a result, the data transfer ability can be considerably improved by providing a cache memory.

## Claims

1. A storage apparatus (1) having a storage device (2) for holding serial data in file units and a storage control unit (3) for controlling input and output of the serial data held in the storage device (2), said storage control unit (3) comprising:
a read control unit (16) for controlling reading the serial data of said storage device (2);
a read request determining unit (12) for determining a plurality of read requests for the serial data in a same file stored in said storage device (2);
a read request frequency counting unit (13) for counting a file read request frequency each time a read request is made; and
a read start determining unit (14) for instructing said read control unit (16) to read the serial data in the file when a frequency count value of a file read request reaches a predetermined value.

2. The storage apparatus (1) according to claim 1, wherein
said read request frequency counting unit (13) counts the file read request frequency each time the read request is made and updates a count value for each file at predetermined time intervals; and
said read start determining unit (14) specifies reading the serial data in the file when the file read request frequency reaches a predetermined frequency or after a predetermined time has passed from a first read request.

3. A method of controlling data reading by using a storage apparatus (1) having a storage device (2) for holding serial data in file units and a storage control unit (3) for controlling input and output of the serial data held in the storage unit, comprising the steps of:
controlling reading the serial data of the storage device (2);
determining a plurality of read requests for the serial data in a same file stored in the storage unit;
counting a file read request frequency each time a read request is made;
updating a count value of each file at predetermined time intervals;
specifying reading the file when a read request frequency count value for the file reaches a predetermined value; and
reading the file when a read request frequency count value for the file reaches a predetermined value or after a predetermined time has passed from a first read request of the file.

4. The method according to claim 3, wherein
said storage control unit comprises a cache memory and a cache management table;
said cache management table comprises a file management table for use in managing priority of a file stored in said cache memory, and a block management table for use in managing storage priority of a block for storage for each file; and
said method comprises the steps of:
assigning a highest priority to a requested file on said file management table;
assigning a highest priority to a last read-requested block and a lowest priority to a first read-requested block;
determining a file whose block is to be deleted in order from the lowest priority of the file when there are no storage areas of a block in the cache memory to write new data in, and then deleting the block in order from the lowest priority of the block in the file; and
checking access conditions of the serial data when sequentially accessed serial data is stored, assigning a highest priority to a file when a block in the file contains data stored in the cache memory and access is gained to a block before the block containing the data, and storing blocks from a block a predetermined number of blocks after an access-requested block to the block stored in the cache memory without deleting the block containing the data.

5. The method according to claim 4, wherein
when the serial data is stored in the cache memory, blocks are stored in order of the serial data from a next block after an access-requested block or a block a predetermined number of blocks after the access-requested block to one block before blocks stored in the cache memory.

6. The method according to claim 4, wherein
when a portion of access-requested serial data not stored in the cache memory is stored in the cache memory, blocks are stored in a reverse order of the serial data from one block before the blocks stored in the cache memory.

7. A storage control device for controlling data in a file by using a storage apparatus having a storage device (2) for holding serial data in file units and a storage control unit (3) for controlling input and output of the serial data held in the storage device (2), comprising:
a cache management table (22) for use in managing a storage area of a cache memory (5), wherein
said cache management table (22) comprises:
a file management table (23) for use in managing file priority to be stored from the storage apparatus to the cache memory (5); and
a block management table (24) for use in managing block storage priority for each file managed in the file management table (23).

8. A method of controlling file data reading by using a storage apparatus having a storage unit for holding serial data in file units and a storage control unit for controlling input and output of the serial data held in the storage unit, wherein
said storage control unit comprises a cache memory and a cache management table;
said cache management table comprises a file management table for use in managing priority of a file stored in said cache memory, and a block management table for use in managing storage priority of a block for storage for each file; and
said method comprises the steps of:
assigning a highest priority for storage in the cache memory to a requested file on said file management table;
assigning a highest priority to a last read-requested block and a lowest priority to a first read-requested block;
determining a file whose block is to be deleted in order from the lowest priority of the file when there are no storage areas of a block in the cache memory to write new data in, and then deleting the block in order from the lowest priority of the block in the file; and
checking access conditions of the serial data when sequentially accessed serial data is stored, assigning a highest priority to a file when a block in the file contains data stored in the cache memory and access is gained to a block before the block containing the data, and storing blocks from a block a predetermined number of blocks after an access-requested block to the block stored in the cache memory without deleting the block containing the data.

9. The method according to claim 8, wherein
when the serial data is stored in the cache memory, blocks are stored in order of the serial data from a next block after an access-requested block or a block a predetermined number of blocks after the access-requested block to one block before blocks stored in the cache memory.

10. The method according to claim 8, wherein
when a portion of access-requested serial data not stored in the cache memory is stored in the cache memory, blocks are stored in a reverse order of the serial data from one block before the blocks stored in the cache memory.

11. A data transfer system having a server (35) for issuing a read request to a storage apparatus (37) at a read request from a requesting client, receiving requested data, and transferring the data to the requesting client, and the storage apparatus (37) connected to the server (35), said server (35) comprising:
a read request reception table (36) storing a read-requested file corresponding to the requesting client, wherein
said storage apparatus (37) comprises a storage device (41) for holding serial data in file units and a storage control unit (40) for controlling input and output of the serial data held in the storage device (41), said storage control unit (40) comprising:
a read control unit (46) for controlling reading the serial data of said storage unit;
a read request determining unit (52) for determining a plurality of read requests for the serial data in a same file stored in said storage unit;
a read request frequency counting unit (55) for counting a file read request frequency each time a read request is made;
a read start determining unit (54) for instructing said read start determining unit to read the serial data in the file when a frequency count value of a file read request reaches a predetermined value; and
said server (35) transfers the serial data to a plurality of requesting clients by reading the serial data in one reading operation from the storage apparatus (37) at a read instruction.

12. The data transfer system according to claim 11, wherein
said storage control unit (40) comprises a cache memory (48) and a cache memory management table (60);
said cache management table (60) comprises a file management table for use in managing file priority to be stored in the cache memory and a block management table for use in managing block storage priority for each file;
a highest priority is assigned to a requested file on said file management table;
a highest priority is assigned to a last read-requested block and a lowest priority is assigned to a first read-requested block, a file whose block is to be deleted in order from the lowest priority of the file is determined when there are no storage areas of a block in the cache memory to write new data in, and then the block is deleted in order from the lowest priority of the block in the file; and
access conditions of the serial data are checked when sequentially accessed serial data is stored, a highest priority is assigned to a file when a block in the file contains data stored in the cache memory and access is gained to a block before the block containing the data, and blocks are stored from a block a predetermined number of blocks after an access-requested block to the block stored in the cache memory without deleting the block containing the data.

13. The data transfer system according to claim 11, wherein
said storage apparatus (37) comprises:
a requesting client information reading unit (45) for reading contents of said read request reception table (36) from said server (35); and
a data transfer unit (49) for transferring the serial data of the file to a requesting client based on the contents of the read request reception table (36).

14. A data distribution device comprising:
read request frequency counting means (1001) for counting for each file a frequency of read requests for a file from a requesting client;
read request frequency determining means (1002) for determining whether or not there is a file for which the frequency of the read request has reached a predetermined value; and
file transmission directing means (1003) for specifying transmission, to the requesting client, of a file for which the frequency of the read request has reached the predetermined value.

15. The data distribution device according to claim 14, wherein
said read request frequency determining unit (1002) sets a large value as the predetermined value for a frequently read-requested file and sets a small value as the predetermined value for a less frequently read-requested file.

16. The data distribution device according to claim 14, further comprising:
first storage means storing the file;
second storage means having a higher reading speed than said first storage means; and
storage control means storing a frequently-read-requested file by priority in said second storage means.

17. The data distribution device according to claim 15, further comprising:
selecting means for selecting a first method, a second method, or a third method;
full-video-on-demand executing means for performing a full-video-on-demand method by setting the predetermined value to 1 when the first method is selected;
near-video-on-demand executing means for performing a near-video-on-demand method by specifying transmission of the file to a requesting client after a predetermined time from a file read request when the second method is selected; and
initial value setting means for setting the predetermined value to a value equal to or larger than 2 when the third method is selected.

18. A computer-readable medium used to direct a computer to perform the functions of:
counting a frequency of file read requests from a requesting client for each file;
determining whether or not there is a file for which the frequency of file read requests has reached a predetermined value; and
specifying transmission of a file, to the requesting client, for which the frequency of the file read request has reached the predetermined value.

19. A storage apparatus (1) having a storage device (2) for holding data in a file and a storage control unit (3) for controlling input and output of the data held in the storage device (2), said storage control unit (3) comprising:
means for determining a plurality of read requests for the data in a same file stored in said storage device (2);
means for counting a file read request frequency each time a read request is made; and
means for reading the data in the file when a frequency count value of a file read request reaches a predetermined value or after predetermined time has passed from a first read request.

20. A method of controlling data reading from in a file in a storage means, comprising the steps of:
determining a plurality of read requests for the data in a same file stored in the storage unit;
counting a file read request frequency each time a read request is made; and
reading the file when a read request frequency count value for the file reaches a predetermined value or after a predetermined time has passed from a first read request.
